# EUROPEAN PATENT APPLICATION

(11) **EP 4 541 477 A1**
(43) Date of publication of application: **23.04.2025**
(21) Application number: 23843091.2
(22) Date of filing: 21.07.2023
(51) Int. Cl.: B21D 22/26, B21D 22/00, G06F 30/20

(54) **METHOD FOR MANUFACTURING PRESS-MOLDED ARTICLE**

(30) Priority: 22.07.2022 JP 2022117070; 13.12.2022 JP 2022198304
(71) Applicant: JFE Steel Corporation, Tokyo 100-0011 (JP)
(72) Inventor: OGAWA, Takeshi, Tokyo 100-0011 (JP); SHINMIYA, Toyohisa, Tokyo 100-0011 (JP); SUMIKAWA, Satoshi, Tokyo 100-0011 (JP)
(74) Representative: Grünecker Patent- und Rechtsanwälte PartG mbB
(86) International application number: PCT/JP2023/026857
(87) International publication number: WO 2024/019168

(57) **Abstract**

Provided is a press-formed article manufacturing method that can reduce the influence of a shape variation of a blank. The press-formed article manufacturing method includes: a reference press-formed article shape acquisition step of acquiring a reference press-formed article shape; a corrugated blank press-formed article shape acquisition step of acquiring a corrugated blank press-formed article shape; a first deviation amount acquisition step of finding first deviation amounts between the reference press-formed article shape and the corrugated blank press-formed article shape; a period-shifted corrugated blank press-formed article shape acquisition step of acquiring a period-shifted corrugated blank press-formed article shape; a second deviation amount acquisition step of finding second deviation amounts between the reference press-formed article shape and the period-shifted corrugated blank press-formed article shape; a measures-required portion specifying step of specifying measures-required portions; and a bead providing step of providing beads for an actual die.

## Description

### Technical Field

The present invention relates to a technology for manufacturing a press-formed article by performing press forming on a blank extracted from a metal sheet having a shape variation. The present invention relates to a press-formed article manufacturing method that can reduce the influence of a shape variation of a blank.

### Background Art

Due to stricter collision safety standards for automobiles, improvement in collision safety for vehicle bodies has been highly demanded. In addition to the demand, in order to improve fuel efficiency of automobiles in response to carbon dioxide emission regulations in these days, it is also necessary to reduce the weight of vehicle bodies. In order to simultaneously improve the collision safety and reduce the weight of vehicle bodies, metal sheets further improved in strength as compared with conventional metal sheets tend to be applied to vehicle bodies.

A press-formed article is manufactured by performing press forming on a blank. An actual metal sheet from which the blank for press forming is extracted does not have a completely flat surface but conventionally has corrugations (a shape variation) along its surface.

Accordingly, an actual blank extracted from the metal sheet may not be necessarily flat and may have a shape variation.

In a case where press forming is performed on such a blank having a shape variation into a vehicle body component, a press-formed article provided after the press forming may be influenced by the shape variation and may deviate from a target dimensional accuracy.

Patent Documents 1 and 2 describe technologies for selecting an article deviating from a target dimensional accuracy out of press-formed articles provided after press forming, for example.

Patent Document 3 describes a technology intended to restrain spring back caused in a press-formed article. Patent Document 3 describes a technology for providing a flange portion with a bead in order to equalize residual stress in the press-formed article. Further, Patent Document 4 describes a technology for restraining spring back such that a bead is provided for a die in drawing to restrain a material flow during press forming.

Patent Document 5 describes the use of a developed blank in performing press forming of a crash box. Patent Document 6 describes a technology for providing a bead for a portion of a press-formed article which portion causes a crack or a wrinkle.

### Citation List

### Patent Literatures

Patent Document 1: JP S62-047504 A
Patent Document 2: JP 2019-002834 A
Patent Document 3: JP 2009-255117 A
Patent Document 4: JP 2012-166225 A
Patent Document 5: WO 2015-053075
Patent Document 6: WO 2015-115348

### Summary of Invention

### Technical Problem

The technology described in Patent Documents 1 and 2 is to specify a portion with a poor dimensional accuracy after press forming by comparing the shapes of formed articles after the press forming with each other. Accordingly, the technology described in Patent Documents 1 and 2 is not to specify a shape variation portion of a blank before press forming and take measures against the shape variation portion. The shape variation portion influences the dimensional accuracy of a press-formed article to be provided after press forming. That is, the technology described in Patent Documents 1 and 2 is not to reduce the influence of a shape variation of a blank before press forming.

In the related art, which portion of a press-formed article is easily influenced by a shape variation of a blank is also not specified, and it is difficult to take measures.

Besides, a blank to be used for press forming is extracted from a metal sheet such as a steel sheet by punching or shearing. Accordingly, in a case where a plurality of blanks is extracted from a metal sheet having a shape variation, the blanks are extracted from different positions, and therefore, even the blanks extracted from the same metal sheet have recesses and protrusions in different portions.

Accordingly, in order to reduce the influence of a shape variation of a blank, it is necessary to take measures in consideration that individual blanks have different shape variations.

Patent Documents 3 and 4 describe a technology to restrain spring back by providing beads. However, the beads are to equalize or reduce stress remaining in a press-formed article released after press forming due to strain applied thereto during the press forming. Accordingly, the technology described in Patent Documents 3 and 4 is intended to control a material flow during press forming and not intended to reduce the influence of a shape variation of a blank, differently from the present invention.

In performing press forming of a press-formed article, a developed blank is extracted in the related art, as described in Patent Document 5, for example. More specifically, a developed blank shape in which a press-formed article is developed in a blank is found, and a developed blank having the developed blank shape thus found is extracted from a metal sheet. Note that the developed blank means a blank having a shape in which a press-formed article is developed on a plane.

Patent Document 6 describes a technology for manufacturing a press-formed article by providing a blank with beads in order to restrain a crack or a wrinkle during press forming. However, the beads do not reduce the influence of a shape variation of a blank before press forming on the dimensional accuracy of a press-formed article after the press forming, differently from the present invention.

The present invention has been accomplished in order to solve such a problem. An object of the present invention is to reduce the influence of a shape variation of a blank on dimensional accuracy of a press-formed article manufactured by performing press forming on the blank, the blank being extracted from a metal sheet having a shape variation.

### Solution to Problem

In order to achieve the object, one aspect of the present invention relates of a press-formed article manufacturing method for manufacturing a press-formed article by performing press forming with use of a press die on a blank extracted from a metal sheet having a shape variation, and the press-formed article manufacturing method includes: a reference press-formed article shape acquisition step of acquiring a press-formed article shape after die release as a reference press-formed article shape by performing press forming analysis to perform press forming with use of a flat blank model having a flat shape by a predetermined die model set based on a shape of a target press-formed article; a corrugated blank press-formed article shape acquisition step of acquiring a press-formed article shape after die release as a corrugated blank press-formed article shape by generating a corrugated blank model with corrugations having a wavelength and an amplitude set based on the shape variation and performing press forming analysis to perform press forming with use of the generated corrugated blank model by the predetermined die model; a first deviation amount acquisition step of finding a deviation portion where the reference press-formed article shape and the corrugated blank press-formed article shape deviate from each other, and a first deviation amount as a deviation amount in the deviation portion, by comparing the reference press-formed article shape with the corrugated blank press-formed article shape; a period-shifted corrugated blank press-formed article shape acquisition step of acquiring a press-formed article shape after die release as a period-shifted corrugated blank press-formed article shape by generating a period-shifted corrugated blank model of at least one type with corrugations having the same amplitude as the corrugations of the corrugated blank model and shifted in period from the corrugations of the corrugated blank model, and performing press forming analysis to perform press forming with use of the generated period-shifted corrugated blank model by the predetermined die model; a second deviation amount acquisition step of finding a deviation portion where the reference press-formed article shape and the period-shifted corrugated blank press-formed article shape of the at least one type deviate from each other, and a second deviation amount as a deviation amount in the deviation portion, by comparing the reference press-formed article shape with the period-shifted corrugated blank press-formed article shape of the at least one type; a measures-required portion specifying step of specifying, as measures-required portions, respective portions of the press-formed article which portions correspond to a portion having a deviation amount exceeding a predetermined threshold as the first deviation amount and a portion having a deviation amount exceeding the predetermined threshold as the second deviation amount; and a forming accuracy improving step of correcting a shape of at least either one selected from a forming surface of an actual die as a press die to be used in manufacture of the press-formed article and an actual blank as the blank to be used in the manufacture of the press-formed article in such a manner as to reduce the deviation amounts in the measures-required portions specified in the measures-required portion specifying step.

### Advantageous Effects of Invention

In the aspect of the present invention, a portion of a press-formed article which portion is largely influenced by a shape variation of a blank is specified in consideration of differences in shape variation between individual blanks. Then, by taking measures suitable for this portion, it is possible to reduce the influence of the shape variation of the blank.

Hereby, with the aspect of the present invention, it is possible to manufacture a press-formed article with an excellent dimensional accuracy, and even with use of blanks extracted from a metal sheet having a shape variation, it is possible to manufacture press-formed articles with an excellent dimensional accuracy at a good yield.

### Brief Description of Drawings

FIG. 1 is an explanatory drawing of each step of a press-formed article manufacturing method according to a first embodiment.
FIG. 2 is an outside drawing of a target component in the first embodiment.
FIG. 3 is an explanatory drawing of a flat blank model.
FIG. 4 is a drawing illustrating a reference press-formed article shape subjected to press-forming (drawing) analysis with use of the flat blank model in FIG. 3 and a change amount from a forming bottom dead center at each portion in the reference press-formed article shape.
FIG. 5 is an explanatory drawing of a corrugated blank model according to the first embodiment.
FIG. 6 is a drawing illustrating a corrugated blank press-formed article shape acquired by press-forming (drawing) analysis with use of the corrugated blank model in FIG. 5 and a change amount from the forming bottom dead center at each portion in the corrugated blank press-formed article shape.
FIG. 7 is a drawing illustrating first deviation amounts found in comparison between the reference press-formed article shape in FIG. 4 and the corrugated blank press-formed article shape in FIG. 6.
FIG. 8 is an explanatory drawing of a period-shifted corrugated blank model with corrugations having the same amplitude as corrugations of the corrugated blank model in FIG. 5 and shifted in period by a wavelength of 1/4 from the corrugations of the corrugated blank model in FIG. 5.
FIG. 9 is a drawing illustrating a period-shifted corrugated blank press-formed article shape acquired by press-forming (drawing) analysis with use of the period-shifted corrugated blank model in FIG. 8 and a change amount from the forming bottom dead center at each portion in the period-shifted corrugated blank press-formed article shape.
FIG. 10 is a drawing illustrating second deviation amounts found in comparison between the reference press-formed article shape in FIG. 4 and the period-shifted corrugated blank press-formed article shape in FIG. 9.
FIG. 11 is a drawing illustrating ranges indicative of the first deviation amounts in FIG. 7 and the second deviation amounts in FIG. 10 in such a manner as to correspond to a target shape.
FIG. 12 is a drawing illustrating a reference press-formed article shape acquired by press-forming (drawing) analysis with use of a die model provided with beads and a change amount from the forming bottom dead center at each portion in the reference press-formed article shape.
FIG. 13 is a drawing illustrating a corrugated blank press-formed article shape acquired by press-forming (drawing) analysis with use of a die model provided with beads and a change amount from the forming bottom dead center at each portion in the corrugated blank press-formed article shape.
FIG. 14 is a drawing illustrating first deviation amounts found in comparison between the reference press-formed article shape in FIG. 12 and the corrugated blank press-formed article shape in FIG. 13.
FIG. 15 is a drawing illustrating a period-shifted corrugated blank press-formed article shape acquired by press-forming (drawing) analysis with use of a die model provided with beads and a change amount from the forming bottom dead center at each portion in the period-shifted corrugated blank press-formed article shape.
FIG. 16 is a drawing illustrating second deviation amounts found in comparison between the reference press-formed article shape in FIG. 12 and the period-shifted corrugated blank press-formed article shape in FIG. 15;
FIG. 17 is a drawing illustrating ranges indicative of the first deviation amounts in FIG. 14 and the second deviation amounts in FIG. 16 in such a manner as to correspond to the target shape.
FIG. 18 is a drawing illustrating a reference press-formed article shape acquired by press-forming (stamping) analysis with use of the flat blank model in FIG. 3 and a change amount from the forming bottom dead center at each portion in the reference press-formed article shape.
FIG. 19 is a drawing illustrating a corrugated blank press-formed article shape acquired by press-forming (stamping) analysis with use of the corrugated blank model in FIG. 5 and a change amount from the forming bottom dead center at each portion in the corrugated blank press-formed article shape.
FIG. 20 is a drawing illustrating first deviation amounts found in comparison between the reference press-formed article shape in FIG. 18 and the corrugated blank press-formed article shape in FIG. 19.
FIG. 21 is an explanatory drawing of a period-shifted corrugated blank model with corrugations having the same amplitude as the corrugations of the corrugated blank model in FIG. 5 and shifted in period by a wavelength of 1/2 from the corrugations of the corrugated blank model in FIG. 5.
FIG. 22 illustrates a period-shifted corrugated blank press-formed article shape acquired by press-forming (stamping) analysis with use of the period-shifted corrugated blank model in FIG. 21 and a change amount from the forming bottom dead center at each portion in the period-shifted corrugated blank press-formed article shape.
FIG. 23 is a drawing illustrating second deviation amounts found in comparison between the reference press-formed article shape in FIG. 18 and the period-shifted corrugated blank press-formed article shape in FIG. 22;
FIG. 24 is a drawing illustrating ranges indicative of the first deviation amounts in FIG. 20 and the second deviation amounts in FIG. 23 to correspond to a target shape.
FIG. 25 is a drawing illustrating a reference press-formed article shape acquired by press-forming (stamping) analysis with use of a die model provided with beads and a change amount from the forming bottom dead center at each portion in the reference press-formed article shape.
FIG. 26 is a drawing illustrating a corrugated blank press-formed article shape acquired by press-forming (stamping) analysis with use of the die model provided with beads and a change amount from the forming bottom dead center at each portion in the corrugated blank press-formed article shape.
FIG. 27 is a drawing illustrating first deviation amounts found in comparison between the reference press-formed article shape in FIG. 25 and the corrugated blank press-formed article shape in FIG. 26.
FIG. 28 is a drawing illustrating a period-shifted corrugated blank press-formed article shape acquired by press-forming (stamping) analysis with use of a die model provided with beads and a change amount from the forming bottom dead center at each portion in the period-shifted corrugated blank press-formed article shape.
FIG. 29 is a drawing illustrating second deviation amounts found in comparison between the reference press-formed article shape in FIG. 25 and the period-shifted corrugated blank press-formed article shape in FIG. 28;
FIG. 30 is a drawing illustrating ranges indicative of the first deviation amounts in FIG. 27 and the second deviation amounts in FIG. 29 in such a manner as to correspond to a target shape.
FIG. 31 is an explanatory drawing of each step of a press-formed article manufacturing method according to a second embodiment.
FIG. 32 is an example of an outside drawing of a target shape in the second embodiment.
FIG. 33 is an explanatory drawing of a flat blank model according to the second embodiment.
FIG. 34 is a drawing illustrating a reference press-formed article shape acquired by press forming analysis with use of the flat blank model in FIG. 33 and a change amount from a forming bottom dead center.
FIG. 35 is an explanatory drawing of a corrugated blank model.
FIG. 36 is a drawing illustrating a corrugated blank press-formed article shape acquired by press forming analysis with use of the corrugated blank model in FIG. 35 and a change amount from the forming bottom dead center.
FIG. 37 is a drawing illustrating deviation amounts found in comparison between the reference press-formed article shape in FIG. 34 and the corrugated blank press-formed article shape in FIG. 36.
FIG. 38 is an explanatory drawing of a period-shifted corrugated blank model with corrugations having the same amplitude as corrugations of the corrugated blank model in FIG. 35 and shifted in period by a wavelength of 1/2 from the corrugations of the corrugated blank model in FIG. 35.
FIG. 39 is a drawing illustrating a period-shifted corrugated blank press-formed article shape acquired by press forming analysis with use of the period-shifted corrugated blank model in FIG. 38 and a change amount from the forming bottom dead center.
FIG. 40 is a drawing illustrating deviation amounts found in comparison between the reference press-formed article shape in FIG. 34 and the period-shifted corrugated blank press-formed article shape in FIG. 39;
FIG. 41 is a drawing illustrating ranges indicative of the deviation amounts in FIG. 37 and in FIG. 40 in such a manner as to correspond to a target shape.
FIG. 42 is a drawing illustrating a blank model provided with beads at portions corresponding to measures-required portions with large deviation amounts which measures-required portions are specified in FIG. 41.
FIG. 43 is a drawing illustrating a bead-provided reference press-formed article shape acquired by press forming analysis with use of a bead-provided flat blank model acquired by providing beads for the flat blank model in FIG. 33, and change amounts from the forming bottom dead center.
FIG. 44 is a drawing illustrating a bead-provided corrugated blank press-formed article shape acquired by press forming analysis with use of a bead-provided corrugated blank model acquired by providing beads for the corrugated blank model in FIG. 35, and change amounts from the forming bottom dead center.
FIG. 45 is a drawing to describe deviation amounts found in comparison between the bead-provided reference press-formed article shape in FIG. 43 and the bead-provided corrugated blank press-formed article shape in FIG. 44.
FIG. 46 is a drawing illustrating a bead-provided period-shifted corrugated blank press-formed article shape acquired by press forming analysis with use of a bead-provided period-shifted corrugated blank model acquired by providing beads for the period-shifted corrugated blank model in FIG. 38, and change amounts from the forming bottom dead center.
FIG. 47 is a drawing to describe deviation amounts found in comparison between the bead-provided reference press-formed article shape in FIG. 43 and the bead-provided period-shifted corrugated blank press-formed article shape in FIG. 46.
FIG. 48 is a drawing illustrating ranges indicative of the deviation amounts in FIG. 45 and in FIG. 47 in such a manner as to correspond to a target shape.

### Description of Embodiments

Next will be described embodiments of the present invention with reference to the drawings.

### [First Embodiment]

A press-formed article manufacturing method according to the present embodiment uses a blank extracted from a metal sheet having a shape variation (recesses and protrusions). In the present embodiment, a press-formed article is manufactured by performing press forming such as stamping or drawing on such a blank by a press die corresponding to a target press-formed article shape. In the present invention, at the time of manufacturing a press-formed article, the influence of the shape variation of the blank on a press-formed article to be manufactured is reduced so as to manufacture a press-formed articles with a higher dimensional accuracy.

Here, the shape variation of a metal sheet indicates, for example, a shape variation in which recesses and protrusions are consecutively formed in a predetermined direction.

A material for a target metal sheet may be a steel material, aluminum alloy, or the like but is not limited to them. The present invention provides a technology suitable for a high-strength steel sheet having a tensile strength of 980 MPa or more, and particularly, a super high-strength steel sheet having a tensile strength of 1470 MPa or more. In a case where the tensile strength of a metal sheet is high, a shape variation of the metal sheet or a blank largely influences dimensional accuracy in comparison with a case where the tensile strength is low.

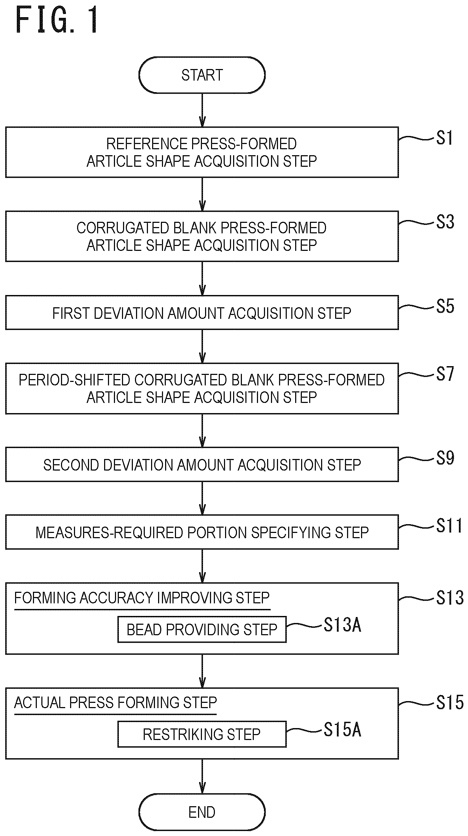

As illustrated in FIG. 1, the press-formed article manufacturing method according to the present embodiment includes a reference press-formed article shape acquisition step S1, a corrugated blank press-formed article shape acquisition step S3, a first deviation amount acquisition step S5, a period-shifted corrugated blank press-formed article shape acquisition step S7, a second deviation amount acquisition step S9, a measures-required portion specifying step S11, a forming accuracy improving step S13, and an actual press forming step S15.

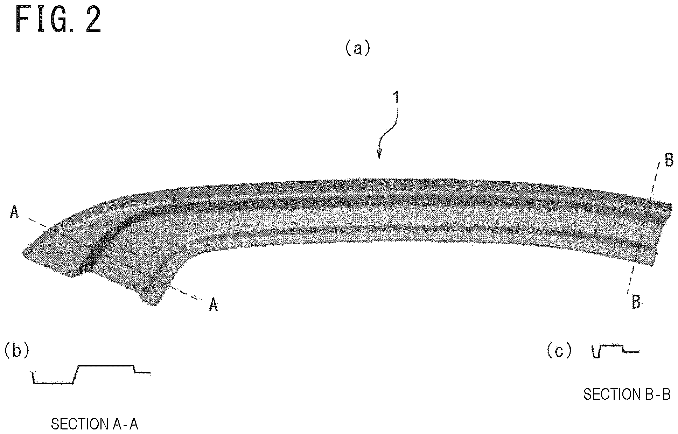

The following describes details of each configuration with reference to a case where press forming is performed with a press-formed article 1 illustrated in FIG. 2 being taken as a target shape. Note that the present embodiment deals with a case where a blank made of a 1.5 GPa-grade steel sheet having a board thickness of 1.2 mm and a blank model corresponding to this are used. However, the present invention is not limited to this.

### <Reference Press-formed Article Shape Acquisition Step>

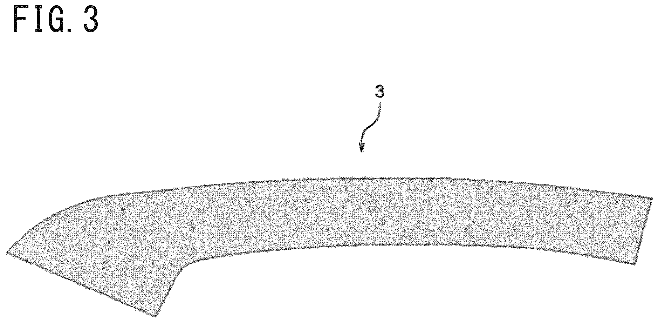

The reference press-formed article shape acquisition step S1 uses a flat blank model 3 as illustrated in FIG. 3. This step is a step of acquiring a press-formed article shape after die release as a reference press-formed article shape by performing press forming analysis by a predetermined die model.

The predetermined die model is set based on a forming-surface shape of an actual die used for press forming on a flat blank into a target press-formed article shape. For example, a die model having a shape corresponding to the target press-formed article shape is taken as the predetermined die model. However, a die model corrected just by the amount of spring back after die release is preferable as the predetermined die model.

Note that the "press forming analysis" in this description includes analysis to acquire a shape at a forming bottom dead center, and analysis to acquire a shape after die release, namely, after spring back.

In the related art, the flat blank model 3 is a blank model which is generally used for press forming analysis and which has a flat shape without any protrusion and recess.

The press forming analysis is generally performed by CAE analysis such as a finite element method (FEM). That is, the press forming analysis should be performed by structural analysis using a computer, e.g., well-known CAE analysis or the like. Press forming includes stamping, drawing, and the like, but the present invention is applicable to any press forming. The present embodiment deals with a case of drawing.

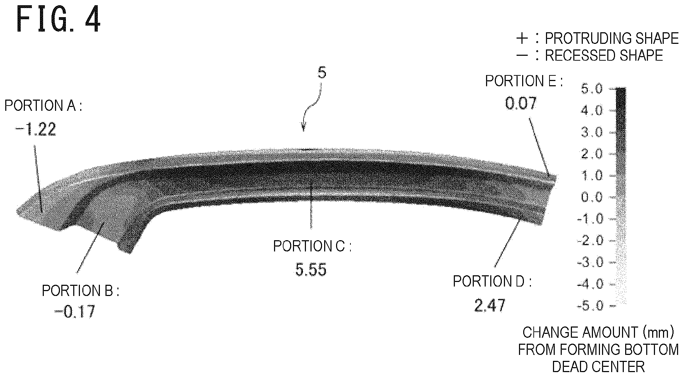

A reference press-formed article shape 5 after die release, which is acquired by the press forming analysis, is illustrated in FIG. 4. In FIG. 4, change amounts due to die release from the forming bottom dead center are illustrated with light and shade.

A change amount is a value acquired by subtracting, from a height, in a press forming direction, of each portion of a press-formed article shape after die release and spring back after press forming, a height of its corresponding portion of the shape at the forming bottom dead center. On this account, the change amount is a value corresponding to a spring back amount in the press forming direction. In a case where a height difference (a change amount) is positive (+), the shape after die release is a protruding shape relative to a forming bottom dead center shape. In the meantime, in a case where a height difference (a change amount) is negative (-), the shape after die release is a recessed shape relative to the forming bottom dead center shape.

In FIG. 4, a portion having a recessed shape relative to the forming bottom dead center is illustrated with light color, and a portion having a protruding shape is illustrated with dark color. A positive (+) number in FIG. 4 is a change amount to a protruding direction (toward the near side on the plane of paper), a negative (-) number is a change amount to a recessed direction (toward the deep side on the plane of paper), and they are indicated in a unit of mm. This also applies to numbers or the like in the following other drawings.

In the present example, the following change amounts were found as illustrated in FIG. 4. That is, a left end portion (a portion A) of the reference press-formed article shape 5 had a change amount of -1.22 mm. A left end (a portion B) of a top portion had a change amount of -0.17 mm. A longitudinally central portion (a portion C) had a change amount of 5.55 mm. A right end (a portion D) of a lower flange portion had a change amount of 2.47 mm. A right end portion (a portion E) had a change amount of 0.07 mm.

### <Corrugated Blank Press-formed Article Shape Acquisition Step>

The corrugated blank press-formed article shape acquisition step S3 uses a blank model corresponding to a shape variation of a metal sheet. This step is a step of acquiring a press-formed article shape after die release by performing the same press forming analysis as in the reference press-formed article shape acquisition step S1.

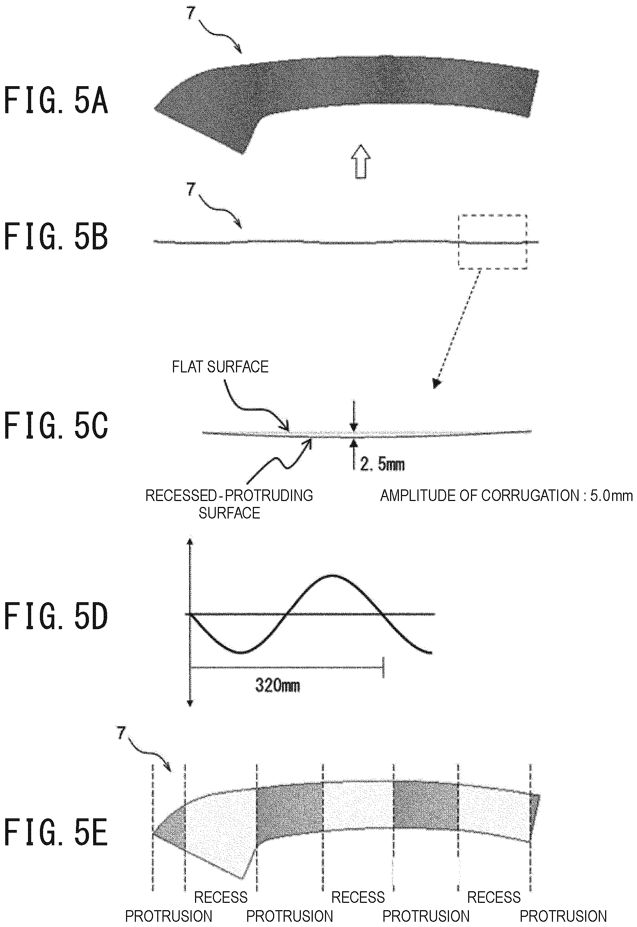

In the corrugated blank press-formed article shape acquisition step S3, first, a corrugated blank model 7 in a shape corresponding to the shape variation of the metal sheet is generated based on the shape variation of the metal sheet. An example of the corrugated blank model 7 is illustrated in FIG. 5A, and a specific shape will be described below.

The corrugated blank model 7 illustrated in FIG. 5A is a blank model with corrugations having a predetermined wavelength and a predetermined amplitude. Light and shade in FIG. 5A express recesses and protrusions such that a portion with dark color has a shape protruding toward the near side on the plane of paper, and a portion with light color has a shape recessed toward the deep side on the plane of paper.

FIG. 5B illustrates a state where FIG. 5A is viewed from a direction of a blank arrow, and FIG. 5C is an enlarged view of part of FIG. 5B. In the example illustrated in FIG. 5, the blank has a shape variation having a board thickness of 1.2 mm, an amplitude of 5.0 mm (±2.5 mm), and a wavelength (see FIG. 5D) of 320 mm. The starting position and the ending position of the corrugations (a shape variation) set to a blank do not have to be edges of a metal sheet. Note that FIG. 5E illustrates the recesses and protrusions of the shape in FIG. 5A in an emphasized manner.

Note that the corrugated blank model 7 may be generated based on a measurement result acquired by measuring the shape of an actual blank extracted from a predetermined position of a metal sheet having a shape variation. For example, the shape of the actual blank is measured by a three-dimensional shape measuring apparatus or the like including a laser range finder. Then, the corrugated blank model 7 may be generated with use of a representative wavelength and amplitude in the measurement result as the wavelength and the amplitude for the corrugations of the corrugated blank model 7.

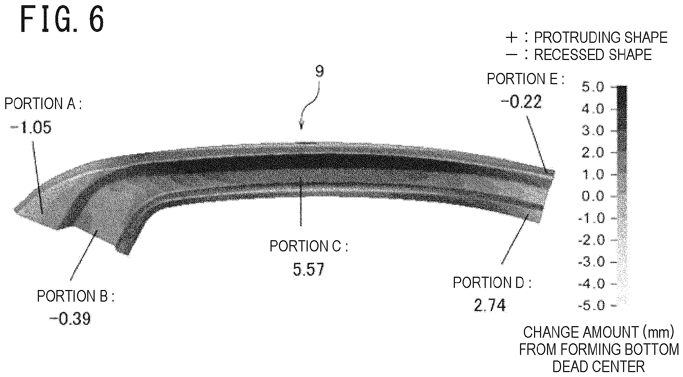

Subsequently, with use of the corrugated blank model 7, press forming analysis to perform press forming by the same predetermined die model as in the reference press-formed article shape acquisition step S1 is performed. Then, based on the analysis result, a press-formed article shape after die release is acquired as a corrugated blank press-formed article shape 9. The corrugated blank press-formed article shape 9 acquired by the press forming analysis is illustrated in FIG. 6. Colors and values illustrated in FIG. 6 have the same meanings as those in FIG. 4.

In the present example, the following change amounts were found as illustrated in FIG. 6. That is, the left end portion (the portion A) of the corrugated blank press-formed article shape 9 had a change amount of -1.05 mm. The left end (the portion B) of the top portion had a change amount of -0.39 mm. The longitudinally central portion (the portion C) had a change amount of 5.57 mm. The right end (the portion D) of the lower flange portion had a change amount of 2.74 mm. The right end portion (the portion E) had a change amount of -0.22 mm.

### <First Deviation Amount Acquisition Step>

In the first deviation amount acquisition step S5, the reference press-formed article shape 5 (FIG. 4) is compared with the corrugated blank press-formed article shape 9 (FIG. 6). A deviation portion where those shapes deviate from each other, and a first deviation amount indicative of a deviation amount in the deviation portion are found.

For example, a plurality of regions is set in the shape of a press-formed article, and respective representative points in the regions are taken as portions where a deviation amount is found. As the regions, a region estimated to easily have spring back after die release may be set representatively, for example. In addition, data of a set of the deviation portion and the first deviation amount may be stored, for example.

In the present embodiment, a press-formed article shape at the forming bottom dead center is regarded as a reference shape, and a change amount (a spring back amount) from the reference shape is found in each portion of a press-formed article shape after die release. Then, a difference between respective change amounts of two press-formed article shapes is found as a deviation amount.

That is, the first deviation amount to be found in the first deviation amount acquisition step S5 is a value acquired by subtracting the change amount (FIG. 4) of the reference press-formed article shape 5 from the change amount (FIG. 6) of the corrugated blank press-formed article shape 9. The change amount (FIG. 6) of the corrugated blank press-formed article shape 9 is a change amount acquired by use of a blank model having a shape variation. The change amount (FIG. 4) of the reference press-formed article shape 5 is a change amount acquired by use of a flat blank model. Accordingly, in a case where the first deviation amount is positive (+), its corresponding portion in the corrugated blank press-formed article shape 9 has a shape protruding relative to the reference press-formed article shape 5. In the meantime, in a case where the first deviation amount is negative (-), its corresponding portion in the corrugated blank press-formed article shape 9 has a shape recessed relative to the reference press-formed article shape 5.

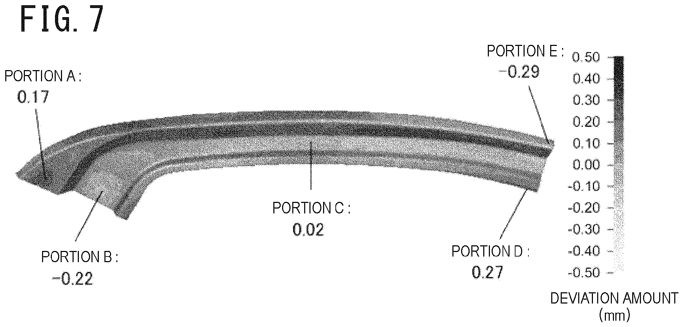

First deviation amounts found as described above are illustrated in FIG. 7.

As illustrated in FIG. 7, the following values were found as the first deviation amounts between the corrugated blank press-formed article shape 9 and the reference press-formed article shape 5. That is, the first deviation amount in the left end portion (the portion A) was 0.17 mm. The first deviation amount in the left end (the portion B) of the top portion was -0.22 **mm.** The first deviation amount in the longitudinally central portion (the portion C) was 0.02 mm. The first deviation amount in the right end (the portion D) of the lower flange portion was 0.27 mm. The first deviation amount in the right end part (the portion E) was -0.29 mm.

### <Period-shifted Corrugated Blank Press-formed Article Shape Acquisition Step>

The period-shifted corrugated blank press-formed article shape acquisition step S7 uses a corrugated blank model having a shape different from the corrugated blank model 7. This step is a step of acquiring a press-formed article shape after die release by performing the same press forming analysis as in the reference press-formed article shape acquisition step S1.

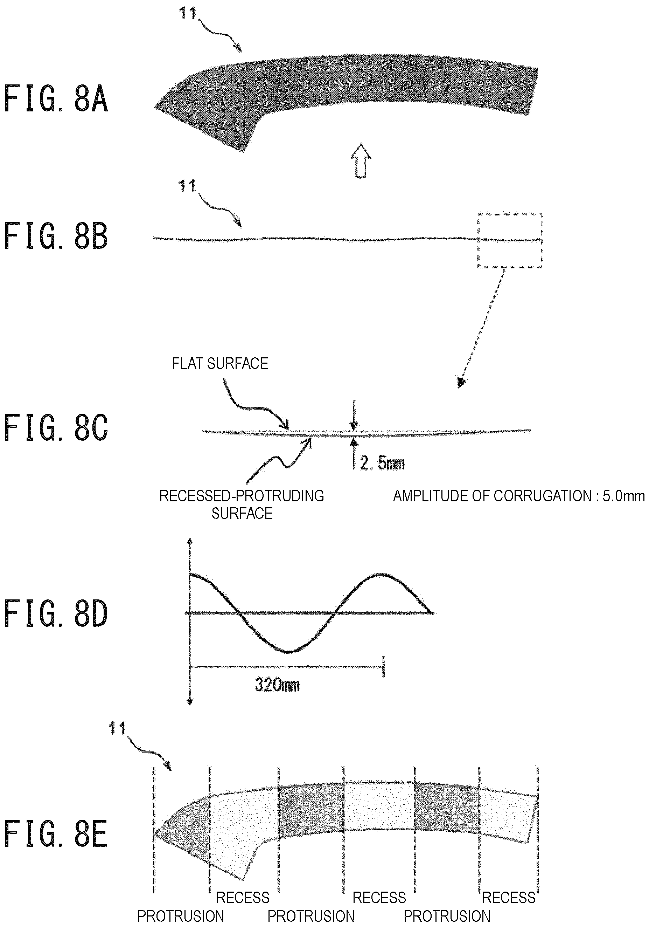

In the period-shifted corrugated blank press-formed article shape acquisition step S7, first, a period-shifted corrugated blank model 11 with corrugations having the same wavelength and amplitude as the corrugations of the corrugated blank model 7 and shifted in period from the corrugations of the corrugated blank model 7. An example of the period-shifted corrugated blank model 11 is illustrated in FIG. 8A, and a specific shape will be described below.

The example illustrated in FIG. 8A is a blank model with periodic corrugations having a predetermined wavelength and a predetermined amplitude, and light and shade in FIG. 8A express recesses and protrusions.

FIG. 8B illustrates a state where FIG. 8A is viewed from a direction of a blank arrow, and FIG. 8C is an enlarged view of part of FIG. 8B. In the example illustrated in FIG. 8, the blank model has a board thickness of 1.2 mm and includes recesses and protrusions with the same amplitude and wavelength as those of the corrugated blank model 7 in FIG. 5. However, the period of the corrugations is shifted by a wavelength of 1/4 from the corrugated blank model 7 toward the right side on the plane of paper (see FIGs. 8D and 8E).

Note that the shift of the period to be set is not limited to the wavelength of 1/4.

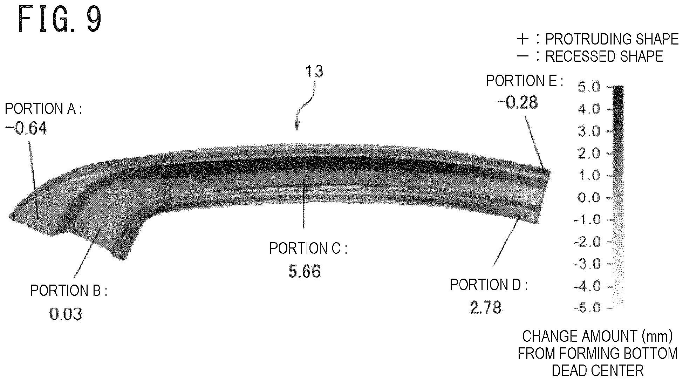

Subsequently, with use of the period-shifted corrugated blank model 11, press forming analysis to perform press forming with the same predetermined die model as in the reference press-formed article shape acquisition step S1 is performed. Then, a press-formed article shape after die release is acquired as a period-shifted corrugated blank press-formed article shape 13. FIG. 9 illustrates the period-shifted corrugated blank press-formed article shape 13. Colors and values illustrated in FIG. 9 have the same meanings as those in FIGs. 4 and 6.

In this example, the following change amounts were found as illustrated in FIG. 9. That is, the left end portion (the portion A) of the period-shifted corrugated blank press-formed article shape 13 had a change amount of -0.64 mm. The left end (the portion B) of the top portion had a change amount of 0.03 mm. The longitudinally central portion (the portion C) had a change amount of 5.66 mm. The right end (the portion D) of the lower flange portion had a change amount of 2.78 mm. The right end portion (the portion E) had a change amount of -0.28 mm.

### <Second Deviation Amount Acquisition Step>

In the second deviation amount acquisition step S9, the reference press-formed article shape 5 is compared with the period-shifted corrugated blank press-formed article shape 13. This step is a step of finding a deviation portion where those shapes deviate from each other, and a second deviation amount indicative of a deviation amount in the deviation portion. A method for finding the second deviation amount is similar to the method described in the first deviation amount acquisition step S5, and therefore, is not described herein.

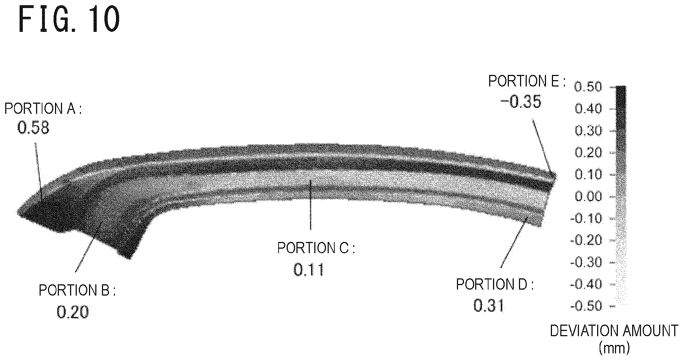

FIG. 10 illustrates second deviation amounts found in comparison between the reference press-formed article shape 5 (FIG. 4) and the period-shifted corrugated blank press-formed article shape 13 (FIG. 9).

As illustrated in FIG. 10, the following values were found as the second deviation amounts between the period-shifted corrugated blank press-formed article shape 13 and the reference press-formed article shape 5. That is, the second deviation amount in the left end portion (the portion A) was 0.58 mm. The second deviation amount in the left end (the portion B) of the top portion was 0.20 mm. The second deviation amount in the longitudinally central portion (the portion C) was 0.11 mm. The second deviation amount in the right end (the portion D) of the lower flange portion was 0.31 mm. The second deviation amount in the right end portion (the portion E) was -0.35 mm.

### <Measures-required Portion Specifying Step>

The measures-required portion specifying step S11 is a step of specifying, as measures-required portions, portions of the press-formed article 1 which portions correspond to a portion having a first deviation amount exceeding a threshold in the first deviation amount acquisition step S5 and a portion having a second deviation amount exceeding a threshold in the second deviation amount acquisition step S9.

For example, in a case where a plurality of press-formed articles is put on top of each other and joined to each other to assemble members of a vehicle body, when the press-formed articles have a large deviation in shape (particularly, a flange portion), it is difficult to join the press-formed articles to each other. In this case, it may be necessary to take measures. In view of this, in the present embodiment, a portion to be largely influenced by a shape variation of a blank, that is, a portion assumed to have a large deviation is specified as a measures-required portion. Hereby, measures to reduce the influence of the shape variation of the blank are taken.

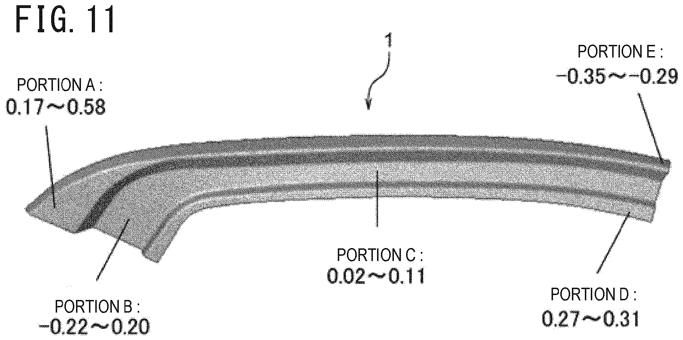

FIG. 11 illustrates both the first deviation amounts (see FIG. 7) found in the first deviation amount acquisition step S5 and the second deviation amounts (see FIG. 10) found in the second deviation amount acquisition step S9 in such a manner as to correspond to the press-formed article 1.

As illustrated in FIG. 11, the first deviation amounts and the second deviation amounts were as follows. That is, the first deviation amount and the second deviation amount in the portion A were from 0.17 mm to 0.58 mm. The first deviation amount and the second deviation amount in the portion B were from -0.22 mm to 0.20 mm. The first deviation amount and the second deviation amount in the portion C were from 0.02 mm to 0.11 mm. The first deviation amount and the second deviation amount in the portion D were from 0.27 mm to 0.31 mm. The first deviation amount and the second deviation amount in the portion E are from -0.35 mm to - 0.29 mm.

In FIG. 11, a minimum range including the first deviation amount and the second deviation amount in each portion is illustrated as a range of a deviation amount that can be caused in each portion. In the present example, one second deviation amount is found for each portion. However, in a case where two or more second deviation amounts are found, a minimum range including one first deviation amount and two or more second deviation amounts in each portion may be taken as a range of a deviation amount estimated to be caused in each portion.

For example, in a case where the threshold in the measures-required portion specifying step S11 is ±0.20 mm, a portion having a deviation amount exceeding the threshold is the portion A, the portion B, the portion D, and the portion E. These portions are specified as measures-required portions.

In the present embodiment, as measures to reduce the influence of the shape variation of the blank, a process of providing beads for portions of an actual die surface which portion corresponds to the measures-required portions is performed. The measures to reduce the influence of the shape variation of the blank correspond to the forming accuracy improving step S13. Then, press forming is performed with use of the actual die provided with the beads.

### <Forming Accuracy Improving Step>

In the forming accuracy improving step S13, a correction process is performed to reduce the deviation amount in the measures-required portion specified in the measures-required portion specifying step S11. That is, a process of correcting a shape of at least either one selected from a forming surface of an actual die as a press die to be used in the manufacture of a press-formed article and an actual blank as a blank to be used in the manufacture of a press-formed article is performed. In the forming accuracy improving step in the present embodiment, in order to reduce the influence of the shape variation of the blank, the forming surface of the actual die to be used for press forming is corrected.
Accordingly, the forming accuracy improving step S13 in the present embodiment includes a bead providing step S13A.

The bead providing step S13A is a step of providing the actual die with the beads described above. The bead is provided for a portion on an actual die surface which portion is to form a measures-required portion or a measures-required portion and its peripheral portion.

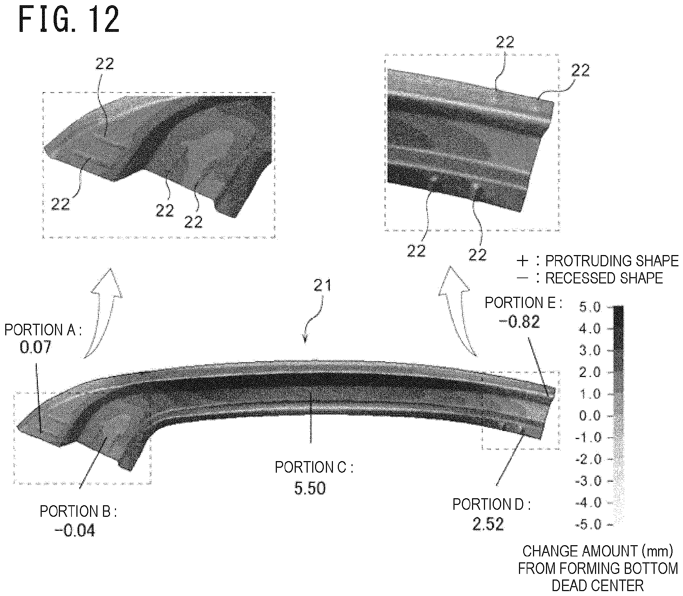

Note that, at the time when a bead mark 22 is formed in the press-formed article, the bead should be provided for the actual die like the bead mark 22 formed in the portion B, the portion D, or the portion E in FIGs. 12 to 16. The bead should be also provided for the actual die such that the longitudinal direction of the bead mark 22 is along a direction intersecting with an end side of the press-formed article. When such a bead mark 22 is formed, it is possible to improve the rigidity of an end portion of the press-formed article, to restrain corrugations (a shape variation) remaining in the press-formed article from a blank before press forming, and to further improve dimensional accuracy.

Accordingly, in the bead providing step S13A, the bead should be provided for the actual die such that the longitudinal direction of the bead mark 22 is along a direction intersecting with an end side of the press-formed article 1 which end side is closest to the measures-required portion. Note that, in a case where the bead cannot be set on the end side closest to the measures-required portion for component design reasons or the like, the bead is set in a vicinal portion where the bead can be set, e.g., the vicinity of the measures-required portion or the like.

In a case where press forming is performed on a blank having a shape variation in which recesses and protrusions are consecutive like the present embodiment, the bead may be provided for the actual die such that the longitudinal direction of the bead mark 22 is along a direction where the recesses and the protrusions of the shape variation are consecutive. When the bead is provided for the actual die as such, the shape variation of the blank can be held down by the bead of the actual die, around the forming bottom dead center in press forming. As a result, the press-formed article can be acquired with the shape variation being held down, thereby making it possible to improve dimensional accuracy.

Accordingly, in the bead providing step S13A, the bead should be provided for the actual die in the following manner. That is, the bead should be provided for the actual die such that the longitudinal direction of the bead mark is along a direction where the recesses and the protrusions in the shape variation of the blank are consecutive, in the measures-required portion or its vicinal portion of the press-formed article. Here, it is preferable that the bead be provided such that the longitudinal direction of the bead mark is along the direction where the recesses and the protrusions in the shape variation of the blank are consecutive, in the measures-required portion of the press-formed article. However, in a case where the bead cannot be provided for the measures-required portion for component design reasons or the like, the bead may be provided such that the longitudinal direction of the bead mark is along the direction where recesses and protrusions in the shape variation of the blank are consecutive, in a vicinal portion around the measures-required portion of the press-formed article, for example.

Note that, in a blank having a shape variation, a line length in the direction where recesses and protrusions are consecutive becomes longer depending on the amplitude. For example, in a case of the flat blank model 3 in FIG. 3 and the corrugated blank model 7 of FIG. 5, the corrugated blank model 7 is longer than the flat blank model 3 in terms of the direction where the recesses and the protrusions are consecutive, that is, in terms of a line length from the left end portion to the right end portion.

In such a case, a difference between the line length of the above blank and the line length of a blank having no shape variation should be found, and the bead should be provided for the actual die to form a bead mark that corrects the difference in the line length. The dimensional accuracy of the press-formed article can be further improved by providing such a bead.

The bead mark to be formed in the measures-required portion may have a protruding shape or a recessed shape, the length, width, or height of the bead mark should be determined appropriately to correspond to an allowable degree from a shape required for a target press-formed article in consideration of an acceptable height or pitch for corrugations (a shape variation) remaining in the press-formed article.

The shape of the bead mark can be a circular shape, an oval shape, an elliptical shape, a square shape, a rectangular shape, a triangular shape, a diamond shape, or the like in a top view. Furthermore, a mountain shape, a trapezoidal shape, a semicircular shape, a semielliptical shape, or the like is also applicable in a side view.

Here, the shape of the bead mark has a shape similar to a bead shape to be provided for the actual die.

### <Actual Press Forming Step>

The actual press forming step S15 is a step of performing press forming on an actual blank with use of the actual die provided with the beads in the bead providing step S13A.

### <Verification of Effect of Bead Formation>

Here, an effect obtained when press forming is performed with use of an actual die provided with beads was verified by press forming analysis. Details of the verification will be described as follows.

Herein, beads were provided for respective portions corresponding to measures-required portions in the predetermined die model used for the above press forming analysis. With use of the die model based on the actual die provided with the beads (hereinafter referred to as a "bead-provided die model"), analysis was performed in a similar manner to the reference press-formed article shape acquisition step S1 to the second deviation amount acquisition step S9. Note that change amounts and deviation amounts described in the following description were found in the same manner as those illustrated in FIGs. 4 to 11.

FIG. 12 illustrates a reference press-formed article shape 21 acquired by performing press forming analysis on the flat blank model 3 (see FIG. 3) with use of the bead-provided die model.

As illustrated in FIG. 12, bead shapes on the bead-provided die model were transferred to the reference press-formed article shape 21, so that bead marks 22 were formed. As illustrated in an enlarged view in FIG. 12, a bead was provided for a portion of the actual die which portions corresponded to the portion A. More specifically, a bead was provided such the longitudinal direction of its corresponding bead mark 22 to be transferred to a blank was along a direction where recesses and protrusions of the shape variation of the blank were consecutive. Furthermore, a bead was provided to be parallel to a left end side of the press-formed article 1.

Further, a bead was provided for a portion of the die model which portion corresponded to each of the portion B, the portion D, and the portion E such that the longitudinal direction of its corresponding bead mark 22 was along a direction intersecting with an end side of the press-formed article 1 which end side was closest to the portion provided with the bead.

As illustrated in FIG. 12, the following change amounts were found. That is, in a case where press forming analysis was performed with use of the bead-provided die model, the portion A of the reference press-formed article shape 21 had a change amount of -0.07 mm. The portion B had a change amount of -0.04 mm. The portion C had a change amount of 5.50 mm. The portion D had a change amount of 2.52 mm. The portion E had a change amount of -0.82 mm.

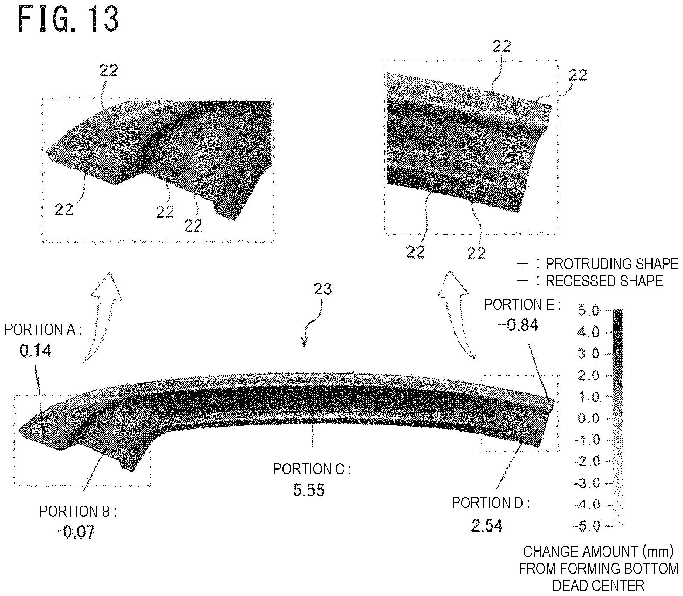

Subsequently, FIG. 13 illustrates a corrugated blank press-formed article shape 23 acquired by performing press forming analysis on the corrugated blank model 7 (see FIG. 5) with use of the bead-provided die model.

As illustrated in FIG. 13, the following change amounts were found. That is, the portion A of the corrugated blank press-formed article shape 23 had a change amount of 0.14 mm. The portion B had a change amount of -0.07 mm. The portion C had a change amount of 5.55 mm. The portion D had a change amount of 2.54 mm. The portion E had a change amount of -0.84 mm.

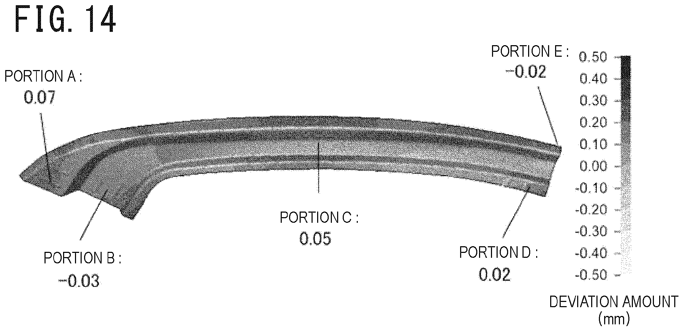

FIG. 14 illustrates first deviation amounts found in comparison between the reference press-formed article shape 21 (FIG. 12) and the corrugated blank press-formed article shape 23 (FIG. 13).

As illustrated in FIG. 14, in a case where press forming analysis was performed with use of the bead-provided die model, first deviation amounts between the reference press-formed article shape 21 and the corrugated blank press-formed article shape 23 were as follows. That is, the first deviation amount in the portion A was 0.07 mm, the first deviation amount in the portion B was -0.03mm, the first deviation amount in the portion C was 0.05mm, the first deviation amount in the portion D was 0.02 mm, and the first deviation amount in the portion E was -0.02 mm.

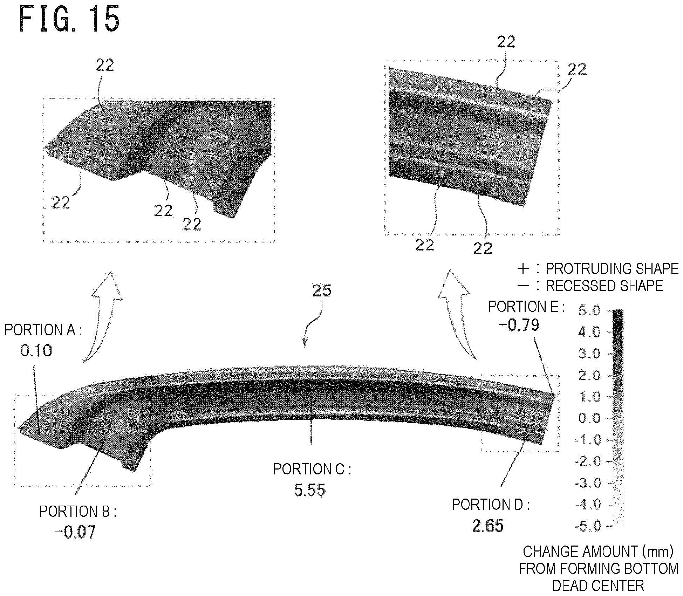

Subsequently, FIG. 15 illustrates a period-shifted corrugated blank press-formed article shape 25 acquired by performing press forming analysis on the period-shifted corrugated blank model 11 (see FIG. 8) with use of the bead-provided die model.

As illustrated in FIG. 15, the following change amounts were found. That is, the portion A of the period-shifted corrugated blank press-formed article shape 25 had a change amount of -0.10 mm. The portion B had a change amount of -0.07 mm, the portion C had a change amount of 5.55 mm, the portion D had a change amount of 2.65 mm, and the portion E had a change amount of -0.79 mm.

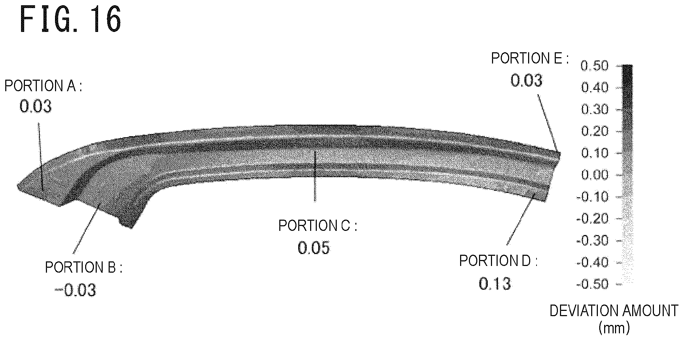

FIG. 16 illustrates second deviation amounts found in comparison between the reference press-formed article shape 21 (FIG. 12) and the period-shifted corrugated blank press-formed article shape 25 (FIG. 15).

As illustrated in FIG. 16, second deviation amounts between the reference press-formed article shape 21 and the period-shifted corrugated blank press-formed article shape 25 were as follows. That is, the second deviation amount in the portion A was 0.03 mm, the second deviation amount in the portion B was -0.03mm, the second deviation amount in the portion C was 0.05mm, the second deviation amount in the portion D was 0.13 mm, and the second deviation amount in the portion E was 0.03 mm.

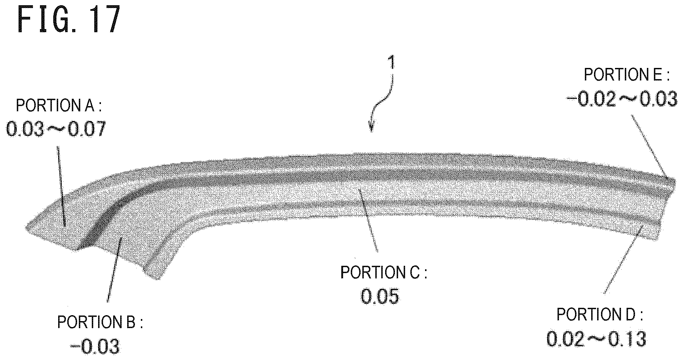

FIG. 17 illustrates the first deviation amounts in FIG. 14 and the second deviation amounts in FIG. 16 in such a manner as to correspond to the press-formed article 1.

As illustrated in FIG. 17, the first deviation amounts and the second deviation amounts are as follows. That is, the deviation amount in the portion A was from 0.03 mm to 0.07 mm, the deviation amount in the portion B was -0.03mm, the deviation amount in the portion C was 0.05mm, the deviation amount in the portion D was from 0.02 mm to 0.13 mm, and the deviation amount in the portion E was from -0.02 mm to 0.03 mm. The deviation amounts in FIG. 17 are markedly smaller than the deviation amounts in FIG. 11 before measures are taken. Accordingly, it can be verified that the use of the bead-provided die model after correction is effective in reducing the influence of the shape variation of the blank.

As such, in a case where press forming is performed on an actual blank having a shape variation with use of a corrected actual die provided with beads, the shape of a press-formed article provided after press forming has a result similar to an analysis result in FIG. 17. That is, the influence of the shape variation of the blank is reduced, and an excellent dimensional accuracy is achieved.

In the above present embodiment, it is possible to specify a portion largely influenced by a shape variation of a blank and to take appropriate measures. Accordingly, it is possible to stably acquire a press-formed article with an excellent dimensional accuracy.

Note that, in the present embodiment, a plurality of patterns of blank models for a blank having a shape variation is generated, and measures-required portions are specified by finding deviation amounts in each of the patterns. Accordingly, the present embodiment is achieved in consideration of differences in shape variation between individual actual blanks.

Note that, in the above description, a period-shifted corrugated blank model of only one type is generated, but period-shifted corrugated blank models of several types may be generated. In this case, the period-shifted corrugated blank models should have corrugations with periods shifted from each other. However, the corrugated blank model and all the period-shifted corrugated blank models have the same wavelength and the same amplitude.

When the number of blank model patterns for a blank having a shape variation is increased, differences in shape variation between individual actual blanks can be more specifically considered.

Further, in the above description, in terms of a deviation amount between two press-formed article shapes, a difference therebetween in the change amount (the spring back amount) from the forming bottom dead center in the press forming direction is taken as the deviation amount. However, the present invention is not limited to this.

For example, in the press forming direction, a height of each portion in one of the press-formed article shapes after die release (after spring back) is acquired. The deviation amount may be a difference obtained by subtracting, from the height of each portion, a height of its corresponding portion in the other one of the press-formed article shapes after die release (after spring back).

In this case, it is necessary to set a common fixed point in the two press-formed article shapes, and the deviation amount may fluctuate depending on how to select the fixed point.

In this respect, like the present embodiment, when change amounts based on the shape at the forming bottom dead center, which is constant regardless of whether or not a blank has a shape variation, are compared with each other, the deviation amount can be accurately and easily found, and this is preferable.

The actual press forming step S15 may further include the following restriking step at the time when press forming is performed with use of a corrected actual die. That is, the actual press forming step S15 may further include a restriking step of re-pressing a press-formed article on which the bead marks 22 are transferred from the actual die provided with the beads in such a manner as to crush the bead marks 22. By crushing the bead marks 22 in the restriking step, the bead marks 22 and their surrounding portions receive strain and harden due to the strain, thereby further improving the rigidity of the press-formed article. Besides, it is possible to hold down corrugations (a shape variation) remaining in the press-formed article from the blank before press forming and to further improve dimensional accuracy.

Note that, in the present invention, it is not necessary to form a clear bead mark on the press-formed article. For example, in a case where the height of a bead provided for the actual die is low, a clear bead mark may not be transferred to the press-formed article. However, even in this case, press forming can be performed while the bead on the actual die is holding down the shape variation of the blank, so that it is possible to reduce the influence of the shape variation of the blank.

### (Examples)

In order to verify the effect of the first embodiment, the press-formed article manufacturing method described in FIG. 1 was performed.

In the present example, the press-formed article 1 in FIG. 2 is a target shape, similarly to the first embodiment. The forming method in the press forming analysis is stamping in the present example, whereas the forming method is drawing in the above embodiment. Note that change amounts and deviation amounts in the present example were found in the same manner as in the first embodiment.

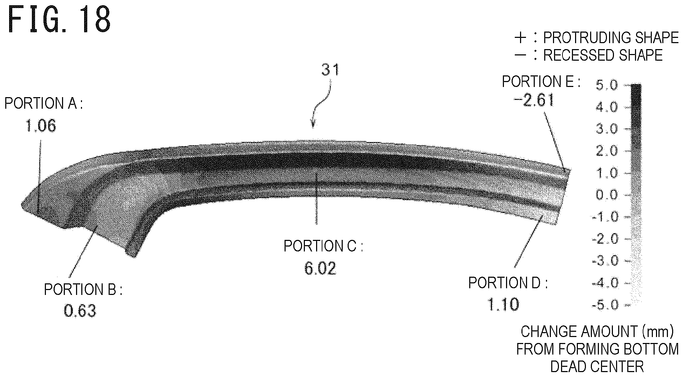

First, in the reference press-formed article shape acquisition step S1, press forming analysis was performed on the flat blank model 3 (see FIG. 3) with use of a predetermined die model. A press-formed article shape after die release was acquired as a reference press-formed article shape 31. This is illustrated in FIG. 18.

As illustrated in FIG. 18, in a case where press forming analysis was performed with use of the predetermined die model, the portion A of the reference press-formed article shape 31 had a change amount of 1.06 **mm.** The portion B had a change amount of 0.63 mm, the portion C had a change amount of 6.02 mm, the portion D had a change amount of 1.10 mm, and the portion E had a change amount of -2.61 mm.

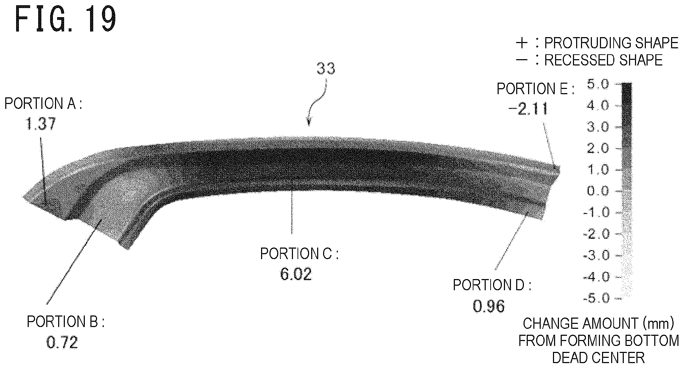

Subsequently, in the corrugated blank press-formed article shape acquisition step S3, press forming analysis was performed on the corrugated blank model 7 in FIG. 5 with use of a predetermined die model similar to the above. A corrugated blank press-formed article shape 33 as a press-formed article shape after die release is illustrated in FIG. 19.

As illustrated in FIG. 19, in a case where press forming analysis was performed with use of the predetermined die model, the portion A of the corrugated blank press-formed article shape 33 had a change amount of 1.37 **mm.** The portion B had a change amount of 0.72 mm, the portion C had a change amount of 6.02 mm, the portion D had a change amount of 0.96 mm, and the portion E had a change amount of -2.11 mm.

Further, in the first deviation amount acquisition step S5, the reference press-formed article shape 31 (FIG. 18) was compared with the corrugated blank press-formed article shape 33 (FIG. 19). Then, deviation amounts (first deviation amounts) between those shapes were found.

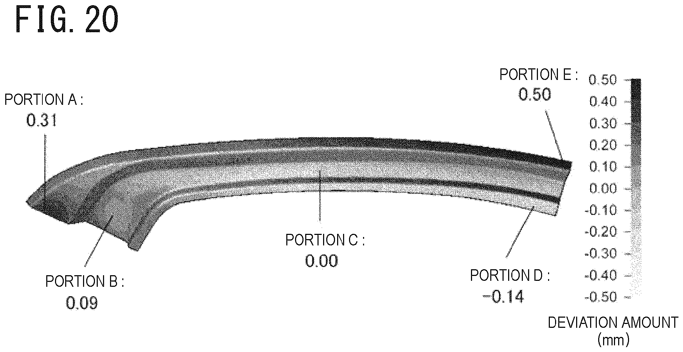

As illustrated in FIG. 20, the following first deviation amounts were found between the corrugated blank press-formed article shape 33 and the reference press-formed article shape 31. That is, the first deviation amount in the portion A was 0.31 mm, the first deviation amount in the portion B was 0.09 mm, the first deviation amount in the portion C was 0.00 mm, the first deviation amount in the portion D was -0.14 mm, and the first deviation amount in the portion E was 0.50 mm.

Subsequently, in the period-shifted corrugated blank press-formed article shape acquisition step S7, a corrugated blank model having a shape different from the corrugated blank model 7 was formed. Then, press forming analysis was performed with use of a predetermined die model similar to the above, and a press-formed article shape after die release was acquired.

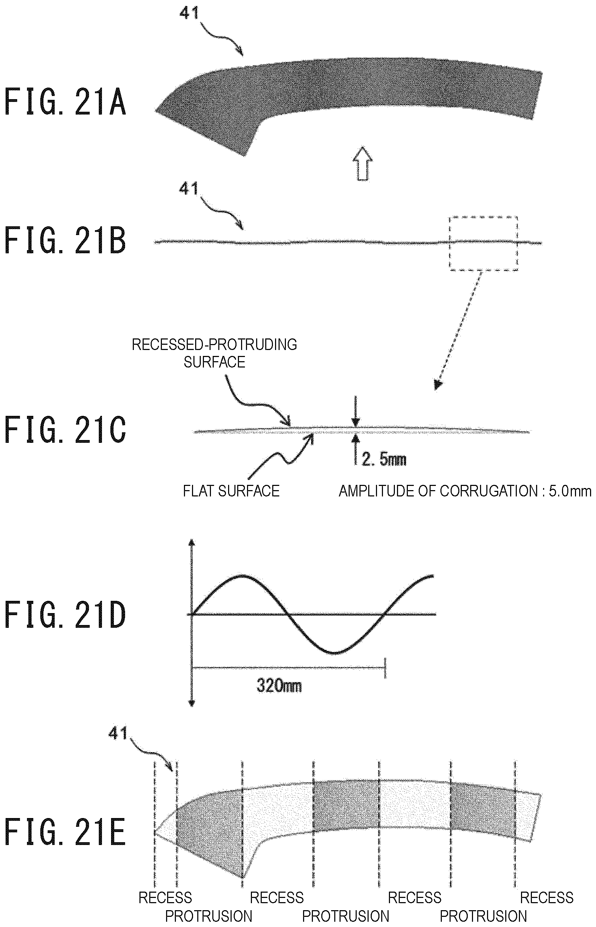

As the corrugated blank model having a shape different from the corrugated blank model 7, the period-shifted corrugated blank model 11 illustrated in FIG. 8 is used in the above embodiment. However, a period-shifted corrugated blank model 41 illustrated in FIG. 21 was used in the present example. A concrete shape of the period-shifted corrugated blank model 41 will be described below.

The example illustrated in FIG. 21 is a blank model with periodic corrugations having a predetermined wavelength and a predetermined amplitude, and light and shade in FIG. 21A express recesses and protrusions.

FIG. 21B illustrates a state where FIG. 21A is viewed from a direction of a blank arrow. FIG. 21C is an enlarged view of part of FIG. 21B. In the example illustrated in FIG. 21, the blank model has a board thickness of 1.2 mm, and the recesses and protrusions have the same amplitude and wavelength as those of the corrugated blank model 7 in FIG. 5. However, the period of the corrugations is shifted by a wavelength of 1/2 from the corrugated blank model 7 toward the right side on the plane of paper (see FIGs. 21D and 21E).

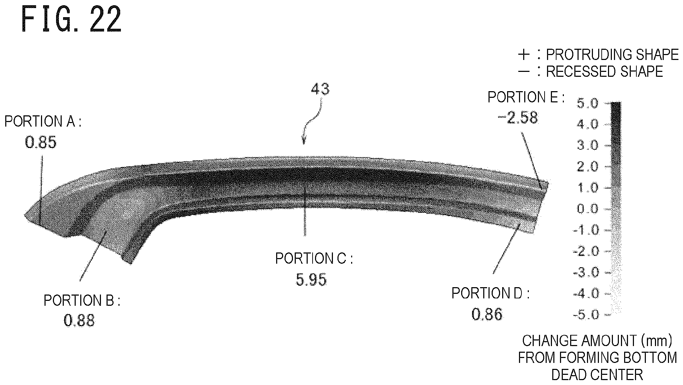

FIG. 22 illustrates a period-shifted corrugated blank press-formed article shape 43 acquired by performing press forming analysis on the period-shifted corrugated blank model 41 in FIG. 21 with use of the predetermined die model.

As illustrated in FIG. 22, in a case where press forming analysis was performed with use of the predetermined die model, the portion A of the period-shifted corrugated blank press-formed article shape 43 had a change amount of 0.85 mm. The portion B had a change amount of 0.88 mm, the portion C had a change amount of 5.95 mm, the portion D had a change amount of 0.86 mm, and the portion E had a change amount of -2.58 mm.

Further, in the second deviation amount acquisition step S9, the reference press-formed article shape 31 (FIG. 18) was compared with the period-shifted corrugated blank press-formed article shape 43 (FIG. 22). Then, deviation amounts (second deviation amounts) were found.

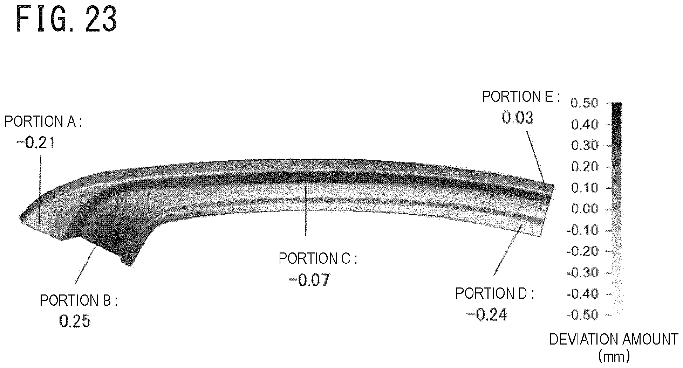

As illustrated in FIG. 23, the following second deviation amounts were found between the period-shifted corrugated blank press-formed article shape 43 and the reference press-formed article shape 31. That is, the second deviation amount in the portion A was -0.21 mm, the second deviation amount in the portion B was 0.25 mm, the second deviation amount in the portion C was -0.07mm, the second deviation amount in the portion D was -0.24 mm, and the second deviation amount in the portion E was 0.03 mm.

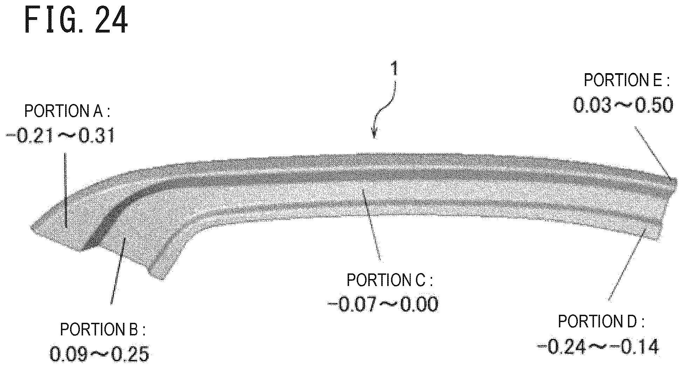

FIG. 24 illustrates both the first deviation amounts (see FIG. 20) found in the first deviation amount acquisition step S5 and the second deviation amounts (see FIG. 23) found in the second deviation amount acquisition step S9 in such a manner as to correspond to the press-formed article 1.

As illustrated in FIG. 24, the following deviation amounts were found before measures were taken. That is, the deviation amount in the portion A was from -0.21 mm to 0.31 mm, the deviation amount in the portion B was from 0.09 mm to 0.25 mm, the deviation amount in the portion C was from -0.07 mm to 0.00mm, the deviation amount in the portion D was from -0.24 mm to -0.14 mm, and the deviation amount in the portion E was from 0.03 mm to 0.50 mm.

Here, for example, the threshold in the measures-required portion specifying step S11 is ±0.20 mm. In this case, a portion having a deviation amount exceeding the threshold is the portion A, the portion B, the portion D, and the portion E. Accordingly, these portions were specified as measures-required portions.

In the present example, as measures to reduce the influence of a shape variation of a blank, beads similar to those in the above embodiment were provided for respective surfaces of portions of an actual die which portions corresponded to the measures-required portions. In the present example, the effect of the beads was verified by press forming analysis. This will be described below.

Here, similarly to the above embodiment, beads were provided for a predetermined die model, and the die model (a bead-provided die model) was used. Analysis similar to the reference press-formed article shape acquisition step S1 to the second deviation amount acquisition step S9 was performed.

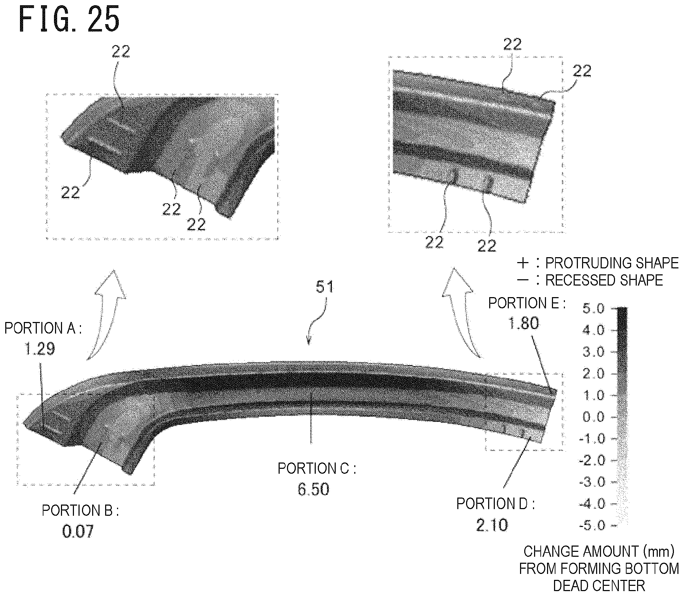

FIG. 25 illustrates a reference press-formed article shape 51 acquired by performing press forming analysis on the flat blank model 3 (see FIG. 3) with use of the bead-provided die model.

As illustrated in FIG. 25, in a case where the bead-provided die model was used, the portion A of the reference press-formed article shape 51 had a change amount of 1.29 **mm.** The portion B had a change amount of 0.07 mm, the portion C had a change amount of 6.50 mm, the portion D had a change amount of 2.10 mm, and the portion E had a change amount of 1.80 mm.

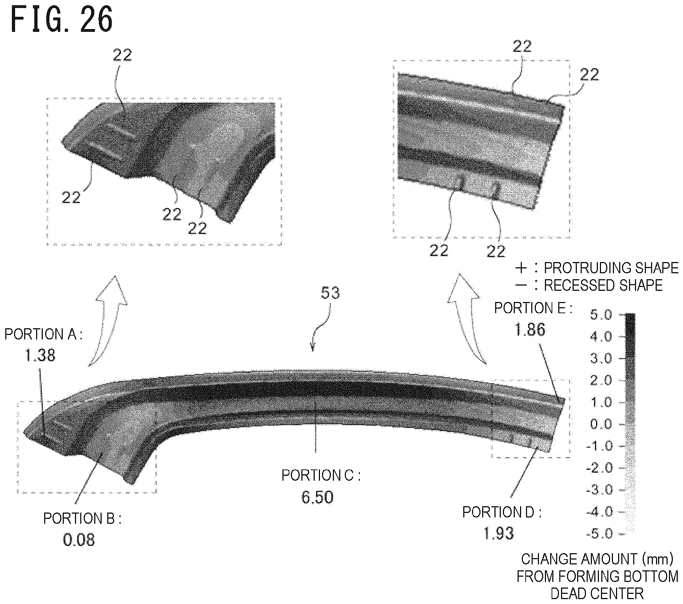

Subsequently, FIG. 26 illustrates a corrugated blank press-formed article shape 53 acquired by performing press forming analysis on the corrugated blank model 7 (see FIG. 5) with use of the bead-provided die model.

As illustrated in FIG. 26, in a case where the bead-provided die model was used, the portion A of the corrugated blank press-formed article shape 53 had a change amount of 1.38 mm. The portion B had a change amount of 0.08 mm, the portion C had a change amount of 6.50 mm, the portion D had a change amount of 1.93 mm, and the portion E had a change amount of 1.86 mm.

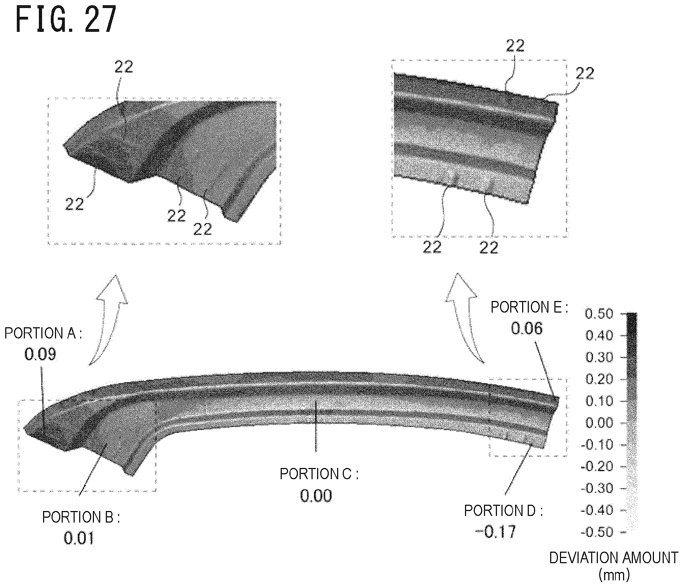

FIG. 27 illustrates first deviation amounts found in comparison between the reference press-formed article shape 51 (FIG. 25) and the corrugated blank press-formed article shape 53 (FIG. 26).

As illustrated in FIG. 27, in a case where the bead-provided die model was used, the following first deviation amounts were found between the reference press-formed article shape 51 and the corrugated blank press-formed article shape 53. That is, the first deviation amount in the portion A was 0.09 mm, the first deviation amount in the portion B was 0.01 mm, the first deviation amount in the portion C was 0.00 mm, the first deviation amount in the portion D was -0.17 mm, and the first deviation amount in the portion E was 0.06 mm.

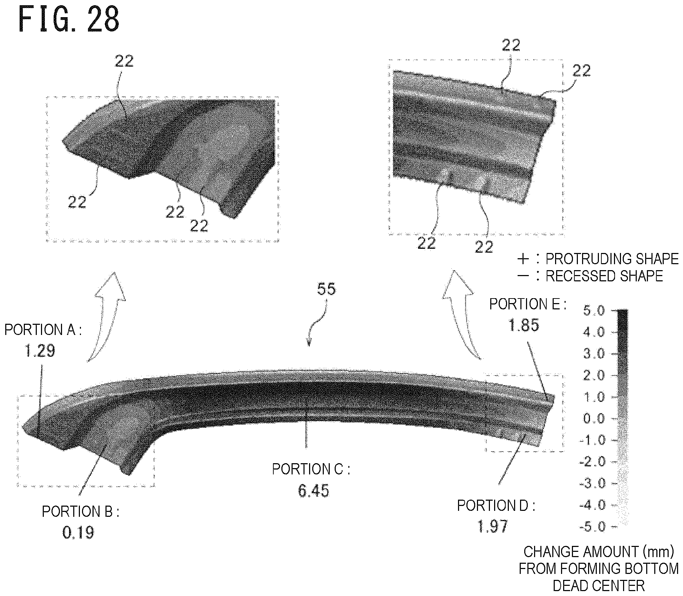

Subsequently, FIG. 28 illustrates a period-shifted corrugated blank press-formed article shape 55 acquired by performing press forming analysis on the period-shifted corrugated blank model 41 (see FIG. 21) with use of the bead-provided die model.

As illustrated in FIG. 28, in a case where the bead-provided die model was used, the portion A of the period-shifted corrugated blank press-formed article shape 55 had a change amount of 1.29 mm. The portion B had a change amount of 0.19 mm, the portion C had a change amount of 6.45 mm, the portion D had a change amount of 1.97 mm, and the portion E had a change amount of 1.85 mm.

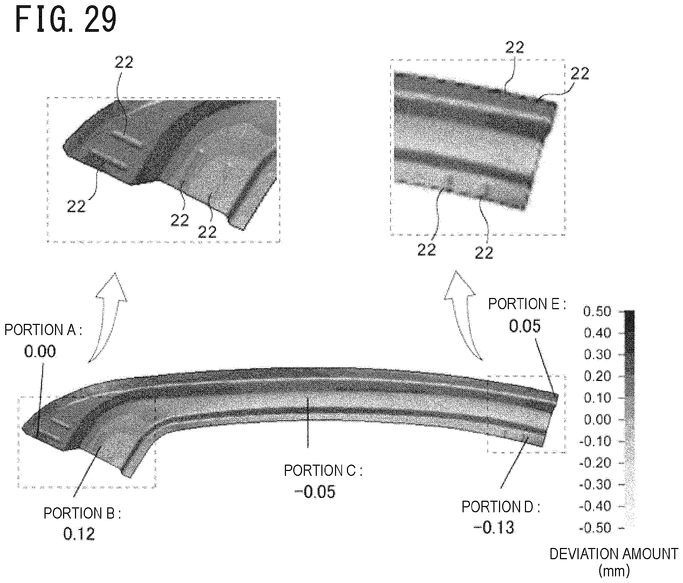

FIG. 29 illustrates second deviation amounts found in comparison between the reference press-formed article shape 51 (FIG. 25) and the period-shifted corrugated blank press-formed article shape 55 (FIG. 28).

As illustrated in FIG. 29, in a case where the bead-provided die model was used, the following second deviation amounts were found between the reference press-formed article shape 51 and the period-shifted corrugated blank press-formed article shape 55. That is, the second deviation amount in the portion A was 0.00 mm, the second deviation amount in the portion B was 0.12 mm, the second deviation amount in the portion C was -0.05 mm, the second deviation amount in the portion D was -0.13 mm, and the second deviation amount in the portion E was 0.05 mm.

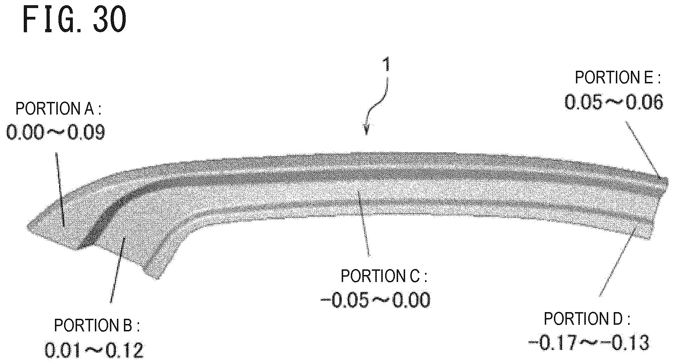

FIG. 30 illustrates both the first deviation amounts in FIG. 27 and the second deviation amounts in FIG. 29 in such a manner as to correspond to the press-formed article 1.

As illustrated in FIG. 30, in a case where the bead-provided die model was used, the following deviation amounts were found. That is, the deviation amount in the portion A was from 0.00 mm to 0.09 mm, the deviation amount in the portion B was from 0.01 mm to 0.12 mm, the deviation amount in the portion C was from -0.05 mm to 0.00mm, the deviation amount in the portion D was -0.17 mm to -0.13 mm, and the deviation amount in the portion E was from 0.05 mm to 0.06 mm. The deviation amounts in FIG. 30 are markedly smaller than the deviation amounts in FIG. 24 before measures are taken. Accordingly, it can be verified that the providing of beads for a die in such a manner as to correspond to measures-required portions is also effective in reducing the influence of a shape variation of a blank even in the case of stamping.

In view of this, in the bead providing step S13A, beads similar to those in the bead-provided die model were provided for an actual die surface. More specifically, the beads were provided for portions of a die which portions were to form measures-required portions in the present example, or the measures-required portions and their peripheral portions.

Then, in the actual press forming step S15, press forming was performed on an actual blank having a shape variation with use of the actual die provided with the beads. Note that the actual blank used herein was a 1.5 GPa-grade steel sheet having a board thickness of 1.2 mm and corresponding to the above-mentioned blank model.

In the present example, the shape of a press-formed article acquired by press forming in the actual press forming step S15 was less influenced by the shape variation of the blank and achieved an excellent dimensional accuracy, similarly to the analysis result in FIG. 30.

### [Second Embodiment]

Next will be described a second embodiment based on the present invention with reference to the drawings.

Note that, in the second embodiment, the same configuration or member as a configuration or member in the first embodiment will be described with use of the same reference sign as in the first embodiment.

A press-formed article manufacturing method according to the present embodiment uses a blank extracted from a metal sheet having a shape variation (recesses and protrusions). The press-formed article manufacturing method is a method to reduce the influence of the shape variation of the blank at the time when press forming such as stamping or drawing is performed and to improve the dimensional accuracy of a press-formed article.

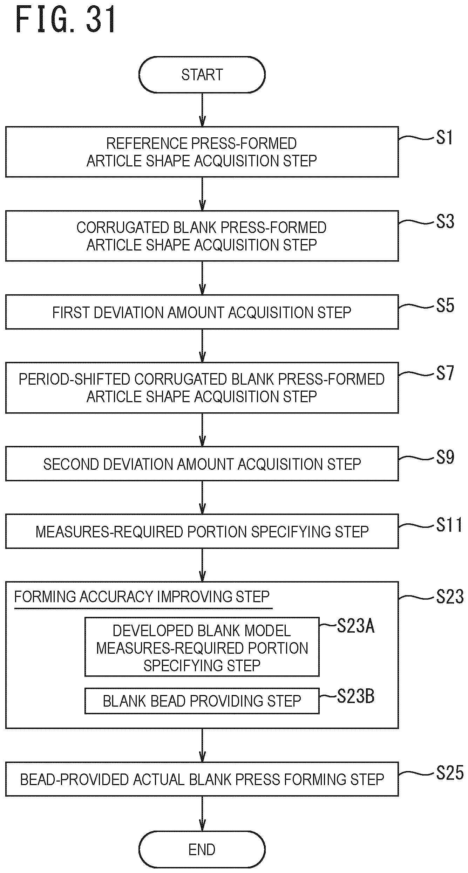

More specifically, as illustrated in FIG. 31, the press-formed article manufacturing method according to the present embodiment includes the reference press-formed article shape acquisition step S1, the corrugated blank press-formed article shape acquisition step S3, the first deviation amount acquisition step S5, the period-shifted corrugated blank press-formed article shape acquisition step S7, the second deviation amount acquisition step S9, the measures-required portion specifying step S11, a forming accuracy improving step S23, and a bead-provided actual blank press forming step S25.

Respective configurations of the reference press-formed article shape acquisition step S1, the corrugated blank press-formed article shape acquisition step S3, the first deviation amount acquisition step S5, the period-shifted corrugated blank press-formed article shape acquisition step S7, the second deviation amount acquisition step S9, and the measures-required portion specifying step S11 are similar to respective configurations of the steps described in the first embodiment.

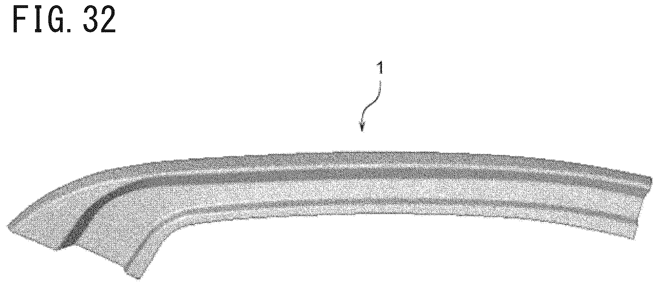

The present embodiment deals with a case where press forming is performed with the press-formed article 1 illustrated in FIG. 32 being taken as a target shape. The following describes each step more specifically. Note that the present embodiment deals with a case where a blank made of a 1.5 GPa-grade steel sheet having a board thickness of 1.2 mm and a blank model corresponding to this are used but is not limited to this.

### <Reference Press-formed Article Shape Acquisition Step>

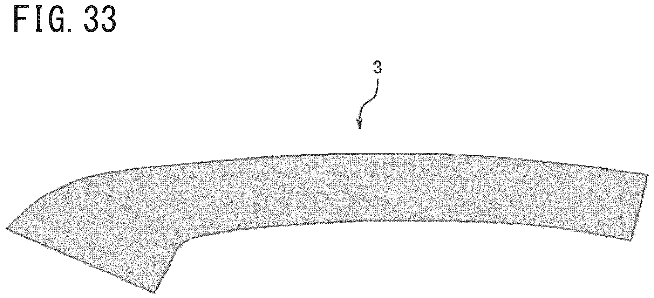

As described in the first embodiment, the reference press-formed article shape acquisition step S1 performs press forming analysis on a predetermined die model with use of the flat blank model 3, as illustrated in FIG. 33. A press-formed article shape after die release is acquired as a reference press-formed article shape.

The press forming is not limited particularly and may be stamping, drawing, or the like. The second embodiment deals with a case where the press forming is stamping.

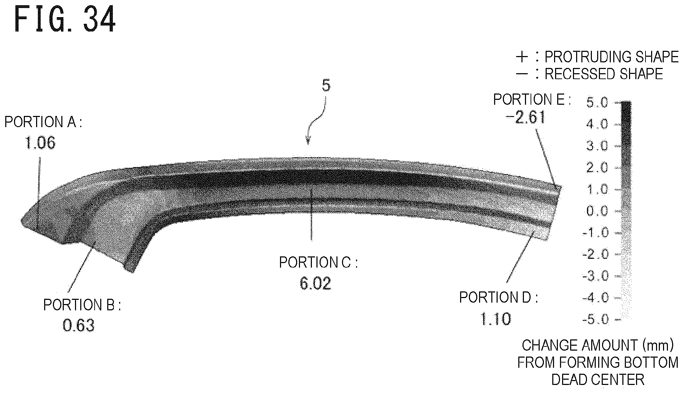

The reference press-formed article shape 5 after die release by press forming analysis is illustrated in FIG. 34. In FIG. 34, a shape and change amounts from a forming bottom dead center are illustrated with light and shade in color.

Definitions of the change amounts and so on in the present embodiment are just what are described in the first embodiment.

In the present example, as illustrated in FIG. 34, the left end portion (the portion A) of the reference press-formed article shape 5 had a change amount of 1.06 mm. The left end (the portion B) of the top portion had a change amount of 0.63 mm, the longitudinally central portion (the portion C) had a change amount of 6.02 mm, the right end (the portion D) of the lower flange portion had a change amount of 1.10 mm, and the right end portion (the portion E) had a change amount of -2.61 mm.

### <Corrugated Blank Press-formed Article Shape Acquisition Step>

The corrugated blank press-formed article shape acquisition step S3 is a step of acquiring a press-formed article shape after die release by performing the same press forming analysis as in the reference press-formed article shape acquisition step S1, with use of a blank model corresponding to the shape variation of the metal sheet.

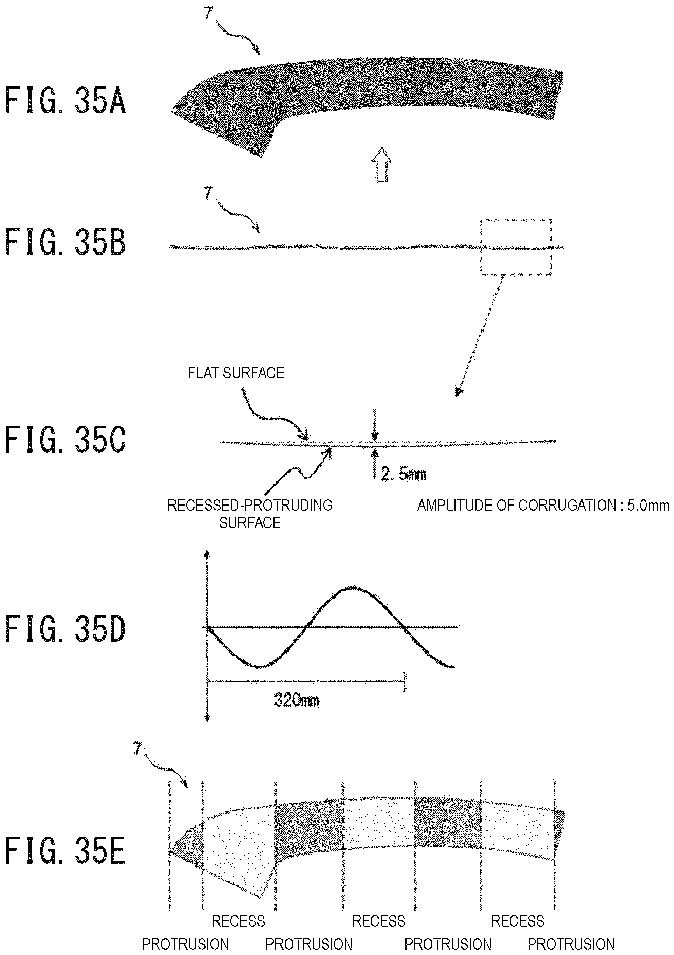

In the corrugated blank press-formed article shape acquisition step S3, first, the corrugated blank model 7 in a shape corresponding to the shape variation of the metal sheet, e.g., corrugations of recesses and protrusions, is formed. An example of the corrugated blank model 7 is illustrated in FIG. 35A, and a specific shape will be described below.

The example illustrated in FIG. 35A is a blank model with corrugations having a predetermined wavelength and a predetermined amplitude, and light and shade in FIG. 35A express recesses and protrusions. A portion with dark color has a shape protruding toward the near side on the plane of paper, and a portion with light color has a shape recessed toward the deep side on the plane of paper.

FIG. 35B illustrates a state where FIG. 35A is viewed from a direction of a blank arrow, and FIG. 35C is an enlarged view of part of FIG. 35B. The blank in the example illustrated in FIG. 35 has a board thickness of 1.2 mm and includes corrugations (recesses and protrusions) with an amplitude of 5.0 mm (±2.5 mm) and a wavelength (see FIG. 35D) of 320 mm. The starting position or the ending position of the recesses and the protrusions to be set in the blank does not have to be an edge of the blank. Note that FIG. 35E illustrates the recesses and the protrusions in the shape of FIG. 35A in an emphasized manner.

Note that the corrugated blank model 7 should be generated as described in the first embodiment.

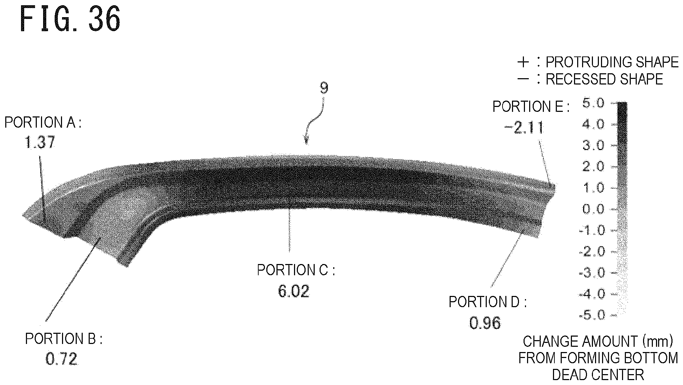

Subsequently, with use of the corrugated blank model 7, press forming analysis to perform press forming by the same predetermined die model as in the reference press-formed article shape acquisition step S1 is performed. Then, based on the analysis result, a press-formed article shape after die release is acquired as the corrugated blank press-formed article shape 9. The corrugated blank press-formed article shape 9 acquired by the press forming analysis is illustrated in FIG. 36. Colors and values illustrated in FIG. 36 have the same meanings as those in FIG. 34.

In the present example, the left end portion (the portion A) of the corrugated blank press-formed article shape 9 had a change amount of 1.37 mm, as illustrated in FIG. 36. The left end (the portion B) of the top portion had a change amount of 0.72 mm, the longitudinally central portion (the portion C) had a change amount of 6.02 mm, the right end (the portion D) of the lower flange portion had a change amount of 0.96 mm, and the right end portion (the portion E) had a change amount of -2.11 mm.

### <First Deviation Amount Acquisition Step>

In the first deviation amount acquisition step S5, the reference press-formed article shape 5 (FIG. 34) is compared with the corrugated blank press-formed article shape 9 (FIG. 36). This step is a step of finding a deviation portion where those shapes deviate from each other, and a deviation amount in the deviation portion.

In the present embodiment, a press-formed article shape at a press forming bottom dead center is taken as a reference shape, and a change amount (a spring back amount) from the reference shape is found in each portion of a press-formed article shape after die release. Then, a difference between respective change amounts of two press-formed article shapes is found as a deviation amount.

That is, the deviation amount to be found in the first deviation amount acquisition step S5 is a value acquired by subtracting the change amount (FIG. 34) of the reference press-formed article shape 5 from the change amount (FIG. 36) of the corrugated blank press-formed article shape 9. The change amount (FIG. 36) of the corrugated blank press-formed article shape 9 is a change amount acquired by use of a blank model having a shape variation. The change amount (FIG. 34) of the reference press-formed article shape 5 is a change amount acquired by use of a flat blank model. Accordingly, in a case where the deviation amount is positive (+), its corresponding portion in the corrugated blank press-formed article shape 9 has a shape protruding relative to the reference press-formed article shape 5. In the meantime, in a case where the deviation amount is negative (-), its corresponding portion in the corrugated blank press-formed article shape 9 has a shape recessed relative to the reference press-formed article shape 5.

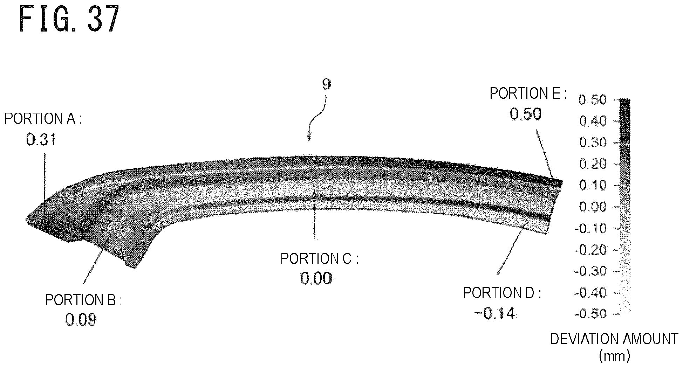

FIG. 37 illustrates the deviation amounts found as described above in such a manner as to correspond to the corrugated blank press-formed article shape 9.

As illustrated in FIG. 37, the following deviation amounts were found between the corrugated blank press-formed article shape 9 and the reference press-formed article shape 5. That is, the deviation amount in the portion A was 0.31 mm, the deviation amount in the portion B was 0.09 mm, the deviation amount in the portion C was 0.00 mm, the deviation amount in the portion D was -0.14 mm, and the deviation amount in the portion E was 0.50 mm.

### <Period-shifted Corrugated Blank Press-formed Article Shape Acquisition Step>

The period-shifted corrugated blank press-formed article shape acquisition step S7 performs press forming analysis with use of a corrugated blank model having a shape different from the corrugated blank model 7. This step is a step of acquiring a press-formed article shape after die release from the analysis result.

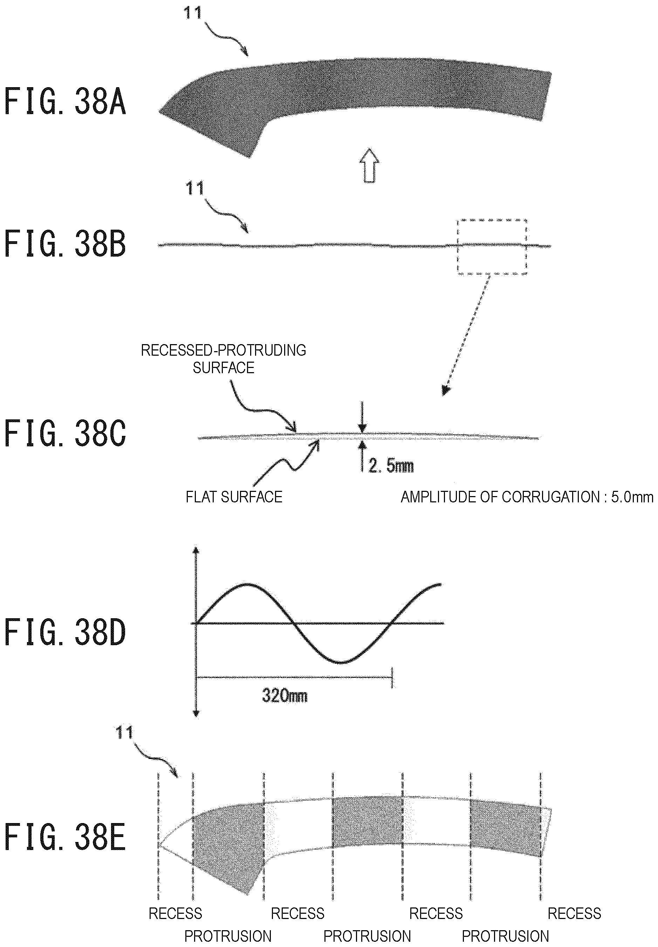

In the period-shifted corrugated blank press-formed article shape acquisition step S7, first, a period-shifted corrugated blank model 11 with corrugations having the same wavelength and amplitude as the corrugations of the corrugated blank model 7 and shifted in period from the corrugations of the corrugated blank model 7. FIG. 38A illustrates an example of the period-shifted corrugated blank model 11. A concrete shape thereof will be described below.

The example illustrated in FIG. 38A is a blank model with periodic corrugations having a predetermined wavelength and a predetermined amplitude, and light and shade in FIG. 38A express recesses and protrusions.

FIG. 38B illustrates a state where FIG. 38A is viewed from a direction of a blank arrow. FIG. 38C is an enlarged view of part of FIG. 38B. In the example illustrated in FIG. 38, the blank model has a board thickness of 1.2 mm, and the recesses and protrusions have the same amplitude and wavelength as those of the corrugated blank model 7 in FIG. 35. However, the period of the corrugations is shifted by a wavelength of 1/2 from the corrugated blank model 7 toward the right side on the plane of paper (see FIGs. 38D and 38E).

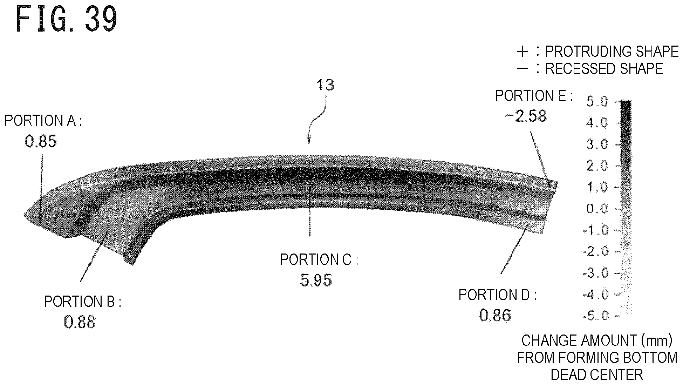

Subsequently, with use of the period-shifted corrugated blank model 11, press forming analysis is performed by the same predetermined die model as in the reference press-formed article shape acquisition step S1. A press-formed article shape after die release is acquired as the period-shifted corrugated blank press-formed article shape 13. FIG. 39 illustrates the period-shifted corrugated blank press-formed article shape 13. Colors and values illustrated in FIG. 39 have the same meanings as those in FIGs. 34 and 36.

In the present example, as illustrated in FIG. 39, the left end portion (the portion A) of the period-shifted corrugated blank press-formed article shape 13 had a change amount of 0.85 mm. The left end (the portion B) of the top portion had a change amount of 0.88 mm, the longitudinally central portion (the portion C) had a change amount of 5.95 mm, the right end (the portion D) of the lower flange portion had a change amount of 0.86 mm, and the right end portion (the portion E) had a change amount of -2.58 mm.

### <Second Deviation Amount Acquisition Step>

The second deviation amount acquisition step S9 is a step of comparing the reference press-formed article shape 5 with the period-shifted corrugated blank press-formed article shape 13 to find a deviation portion where those shapes deviate from each other, and a deviation amount in the deviation portion. A method for finding the deviation amount is similar to the method described in the first deviation amount acquisition step S5, and therefore, is not described herein.

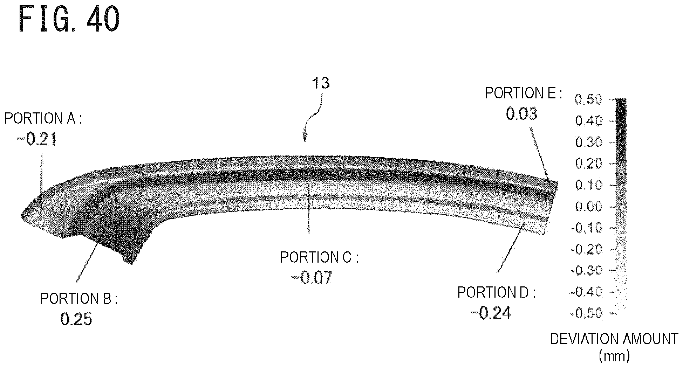

The reference press-formed article shape 5 (FIG. 34) is compared with the period-shifted corrugated blank press-formed article shape 13 (FIG. 39). FIG. 40 illustrates deviation amounts found therebetween at this time in such a manner as to correspond to the period-shifted corrugated blank press-formed article shape 13.

As illustrated in FIG. 40, the following deviation amounts were found between the period-shifted corrugated blank press-formed article shape 13 and the reference press-formed article shape 5. That is, the deviation amount in the portion A was -0.21 mm, the deviation amount in the portion B was 0.25 mm, the deviation amount in the portion C was -0.07mm, the deviation amount in the portion D was -0.24 mm, and the deviation amount in the portion E was 0.03 mm.

### <Measures-required Portion Specifying Step>

The measures-required portion specifying step S11 is a step of specifying, as a measures-required portion, a portion where either of the deviation amounts found in the first deviation amount acquisition step S5 and the second deviation amount acquisition step S9 exceeds a threshold.

For example, in a case where a plurality of press-formed articles is put on top of each other and joined to each other to assemble members of a vehicle body, when the press-formed articles have a large deviation in shape (particularly, a flange portion), it is difficult to join the press-formed articles to each other. In that case, it may be necessary to take measures. In view of this, in the present embodiment, a portion expected to be largely influenced by a shape variation of a blank (a portion expected to have a large deviation) is specified as a measures-required portion, and measures to reduce the influence of the shape deviation are taken.

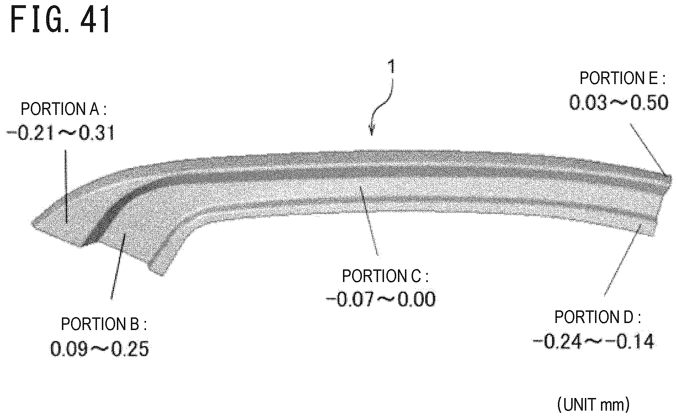

FIG. 41 illustrates ranges of the deviation amounts (see FIG. 37) found in the first deviation amount acquisition step S5 and the deviation amounts (see FIG. 40) found in the second deviation amount acquisition step S9 in such a manner as to correspond to a target shape (the press-formed article 1).

As illustrated in FIG. 41, the following deviation amounts were found. That is, the deviation amount in the portion A was from -0.21 mm to 0.31 mm, the deviation amount in the portion B was from 0.09 mm to 0.25 mm, the deviation amount in the portion C was from -0.07 mm to 0.00 mm, the deviation amount in the portion D was from - 0.24 mm to -0.14 mm, and the deviation amount in the portion E was from 0.03 mm to 0.50 mm.

For example, the threshold in the measures-required portion specifying step S11 is ±0.15 mm. In this case, a portion having a deviation amount exceeding the threshold is the portion A, the portion B, the portion D, and the portion E. Accordingly, these portions are specified as measures-required portions in the press-formed article shape.

### <Forming Accuracy Improving Step>

The forming accuracy improving step S23 is a step of performing a correction process to reduce the deviation amount in the measures-required portion specified in the measures-required portion specifying step S11. More specifically, a process of correcting a shape of at least either one selected from a forming surface of an actual die as a press die to be used in the manufacture of a press-formed article and an actual blank as a blank to be used in the manufacture of a press-formed article is performed.

In the forming accuracy improving step S23 in the present embodiment, in order to reduce the influence of a shape variation of a blank, the actual blank to be used for press forming is corrected. Accordingly, the forming accuracy improving step S23 in the present embodiment includes a developed blank model measures-required portion specifying step S23A, and a blank bead providing step S23B.

### [Developed Blank Model Measures-required Portion Specifying Step]

The developed blank model measures-required portion specifying step S23A is a step of specifying a portion of a blank model which portion corresponds to a measures-required portion of a press-formed article shape.

In the present example, after a measures-required portion in a press-formed article shape acquired by press forming analysis is specified, the press-formed article shape is subjected to reverse forming analysis and developed to a blank model. Hereby, which portion of the blank model corresponds to the measures-required portion in the press-formed article shape can be calculated.

In the present example, a portion having a deviation amount exceeding the threshold in the corrugated blank press-formed article shape 9 was the portions A, E (see FIG. 37). A portion having a deviation amount exceeding the threshold in the period-shifted corrugated blank press-formed article shape 13 was the portions A, B, D (see FIG. 40).

Accordingly, in the measures-required portion specifying step S11, the portions A, B, D, E were specified as measures-required portions in the press-formed article shape.

In the developed blank model measures-required portion specifying step S23A, first, the specified measures-required portions are set on one press-formed article shape. The measures-required portions in the present example are the portions A, B, D, E.

The press-formed article shape to which the measures-required portions are set may be any of the reference press-formed article shape 5, the corrugated blank press-formed article shape 9, and the period-shifted corrugated blank press-formed article shape 13.

Subsequently, the press-formed article shape to which the measures-required portions are set is subjected to reverse forming analysis and is developed to a blank model. When the press-formed article shape to which the measures-required portions are set is developed to the blank model, measures-required portions on the blank model can be specified.

Since the measures-required portions on the blank model are specified, measures to reduce the influence of a shape variation of a blank can be taken for the blank before press forming. In the present embodiment, as the measures, beads are provided for portions of an actual blank which portions correspond to the measures-required portions on the blank model. In view of this, an effect obtained by performing press forming with use of an actual blank provided with beads was verified by press forming analysis. The following describes this effect.

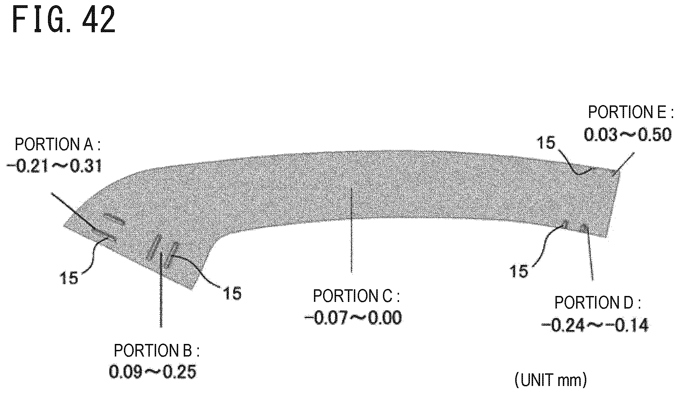

Examples of the beads to be provided for the blank are illustrated in FIG. 42. In the present embodiment, the measures-required portions (the portions A, B, D, E) were set in the reference press-formed article shape 5. The reference press-formed article shape 5 was developed to specify measures-required portions on the flat blank model 3. Then, beads illustrated in FIG. 42 were provided for the measures-required portions on the flat blank model 3.

Note that FIG. 42 also illustrates portions corresponding to the portions A to E of the reference press-formed article shape 5 and respective ranges (the same as in FIG. 41) of deviation amounts in those portions.

As illustrated in FIG. 42, portions of the blank model which portions corresponded to the measures-required portions in the press-formed article shape, that is, the portions A, B, D, E were set as measures-required portions on the blank model. Then, beads 15 were provided for the portions A, B, D, E on the blank model. In the example of FIG. 42, each bead 15 is provided in a direction where its longitudinal direction intersects with or is parallel to an end side of the blank model. However, the bead in the present invention is not limited to this and may be provided in a direction along the advancing direction of corrugations of a corrugated blank model (along a pitch direction of recesses and protrusions), for example.

In the present example, the beads 15 were also provided for the corrugated blank model 7 and the period-shifted corrugated blank model 11 in a similar manner. Then, similar analysis was performed from the reference press-formed article shape acquisition step S1 to the second deviation amount acquisition step S9 with use of each blank model provided with the beads 15.

Note that change amounts and deviation amounts described in the following description were found in the same manner as those illustrated in FIGs. 34 to 41.

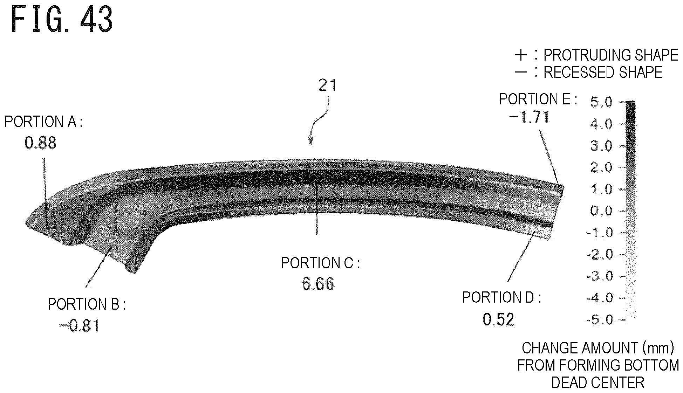

FIG. 43 illustrates a bead-provided reference press-formed article shape 21 acquired by performing press forming analysis on the flat blank model 3 provided with the beads 15 as illustrated in FIG. 42.

As illustrated in FIG. 43, the left end portion (the portion A) of the bead-provided reference press-formed article shape 21 had a change amount of 0.88 mm. The left end (the portion B) of the top portion had a change amount of -0.81 mm, the longitudinally central portion (the portion C) had a change amount of 6.66 mm, the right end (the portion D) of the lower flange portion had a change amount of 0.52 mm, and the right end portion (the portion E) had a change amount of -1.71 mm.

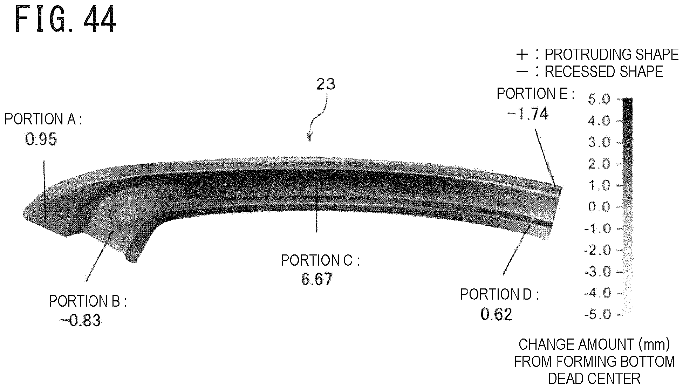

Subsequently, beads 15 similar to those in FIG. 42 were provided for the corrugated blank model 7 in FIG. 35. FIG. 44 illustrates a bead-provided corrugated blank press-formed article shape 23 acquired by performing press forming analysis on the corrugated blank model 7 provided with the beads 15.

As illustrated in FIG. 44, the left end portion (the portion A) of the bead-provided corrugated blank press-formed article shape 23 had a change amount of 0.95 mm. The left end (the portion B) of the top portion had a change amount of -0.83 mm, the longitudinally central portion (the portion C) had a change amount of 6.67 mm, the right end (the portion D) of the lower flange portion had a change amount of 0.62 mm, and the right end portion (the portion E) had a change amount of -1.74 mm.

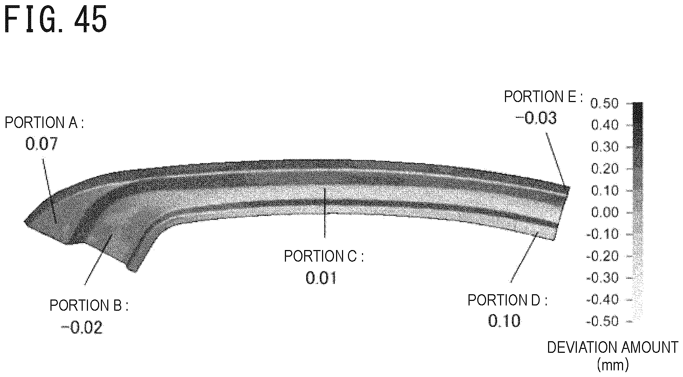

FIG. 45 illustrates deviation amounts found in comparison between the bead-provided reference press-formed article shape 21 (FIG. 43) and the bead-provided corrugated blank press-formed article shape 23 (FIG. 44), similarly to the first deviation amount acquisition step S5.

As illustrated in FIG. 45, the following deviation amounts were found between the bead-provided corrugated blank press-formed article shape 23 and the bead-provided reference press-formed article shape 21. That is, the deviation amount in the portion A was 0.07 mm, the deviation amount in the portion B was -0.02 mm, the deviation amount in the portion C was 0.01 mm, the deviation amount in the portion D was 0.10 mm, and the deviation amount in the portion E was -0.03 mm.

As described above, the deviation amounts in the case of the blank model provided with the beads 15 are markedly reduced in comparison with the deviation amounts (see FIG. 37) in the case of the blank model with no bead 15. Thus, it is found that the beads 15 provided for the blank model reduce the influence of the shape variation of the blank on the dimensional accuracy of the press-formed article.

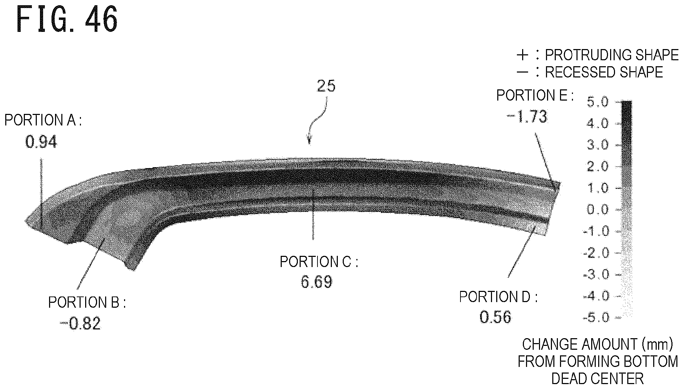

Subsequently, beads 15 similar to those in FIG. 42 were provided for the period-shifted corrugated blank model 11 in FIG. 38. FIG. 46 illustrates a bead-provided period-shifted corrugated blank press-formed article shape 25 acquired by performing press forming analysis on the period-shifted corrugated blank model 11 provided with the beads 15.

As illustrated in FIG. 46, the left end portion (the portion A) of the bead-provided period-shifted corrugated blank press-formed article shape 25 had a change amount of 0.94 mm. The left end (the portion B) of the top portion had a change amount of -0.82 mm, the longitudinally central portion (the portion C) had a change amount of 6.69 mm, the right end (the portion D) of the lower flange portion had a change amount of 0.56 mm, and the right end portion (the portion E) had a change amount of -1.73 mm.

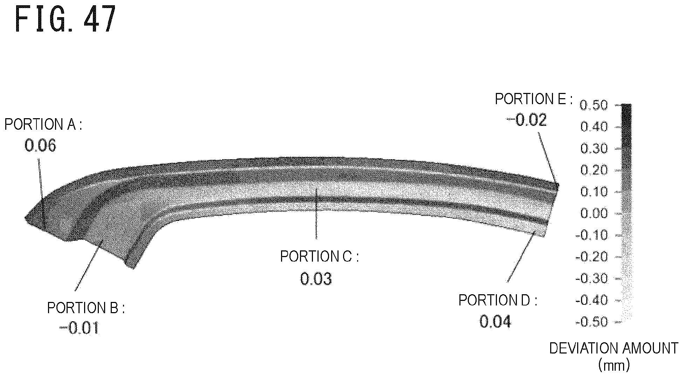

FIG. 47 illustrates deviation amounts found in comparison between the bead-provided reference press-formed article shape 21 (FIG. 43) and the bead-provided period-shifted corrugated blank press-formed article shape 25 (FIG. 46) similarly to the second deviation amount acquisition step S9.

As illustrated in FIG. 47, the following deviation amounts were found between the bead-provided period-shifted corrugated blank press-formed article shape 25 and the bead-provided reference press-formed article shape 21. That is, the deviation amount in the portion A was 0.06 mm, the deviation amount in the portion B was - 0.01 mm, the deviation amount in the portion C was 0.03 mm, the deviation amount in the portion D was 0.04 mm, and the deviation amount in the portion E was -0.02 mm.

Even in the case of the period-shifted corrugated blank model, the deviation amounts in the blank model provided with the beads 15 are markedly reduced in comparison with the deviation amounts (see FIG. 40) in the case of the blank model with no bead 15. Thus, it is found that the influence of the shape variation of the blank on the dimensional accuracy of the press-formed article is reduced.

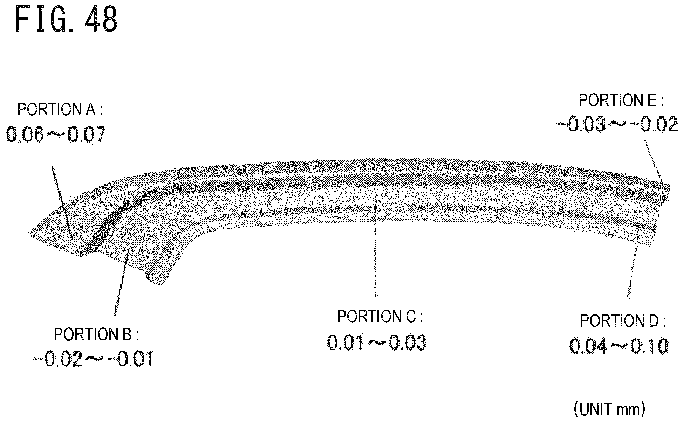

FIG. 48 illustrates both the deviation amounts (see FIG. 45) found in the first deviation amount acquisition step S5 and the deviation amounts (see FIG. 47) found in the second deviation amount acquisition step S9 in such a manner as to correspond to a target shape.

As illustrated in FIG. 48, the following deviation amounts were found in a case where a blank model was provided with the beads 15. That is, the deviation amount in the portion A was from 0.06 mm to 0.07 mm, the deviation amount in the portion B was from -0.02 mm to - 0.01 mm, the deviation amount in the portion C was from 0.01 mm to 0.03 mm, the deviation amount in the portion D was from 0.04 mm to 0.10 mm, and the deviation amount in the portion E was from -0.03 mm to -0.02 mm. Thus, the deviation amounts are markedly reduced in comparison with the deviation amounts in FIG. 41 before measures are taken.

As the analysis result, the beads 15 were provided for the measures-required portions on the blank model which measured-required portions were specified in the developed blank model measures-required portion specifying step S23A. Hereby, it was verified that the influence of the shape variation of the blank was reduced, and the dimensional accuracy of the press-formed article shape was improved.

### [Blank Bead Providing Step]

The blank bead providing step S23B is a step of providing the bead 15 to a portion of an actual blank which portion corresponds to the measures-required portion specified in the developed blank model measures-required portion specifying step S23A.

First, the portion of the actual blank which portion corresponds to the measures-required portion (the portions A, B, D, E in FIG. 42) specified in the developed blank model measures-required portion specifying step S23A is set as a measures-required portion in the actual blank.

Then, preforming to provide the bead 15 similar to that in FIG. 42 for the measures-required portion thus set in the actual blank is performed.

Note that, at the time when a bead is provided for the actual blank, the bead should be provided like the bead 15 formed in the portion B, the portion D, or the portion E in FIG. 42. That is, the bead should be provided such that its longitudinal direction is along a direction intersecting with an end side of the actual blank which end side is closest to the measures-required portion. Note that, in a case where the bead cannot be set on the end side closest to the measures-required portion for component design reasons or the like, the bead is set in a vicinal area where the bead can be set, e.g., the vicinity of the measures-required portion or the like.

In a case where press forming is performed on an actual blank having a shape variation in which recesses and protrusions are consecutive, the bead may be provided as follows. That is, the bead 15 may be provided for the actual blank such that, in the measures-required portion or its vicinal portion in the actual blank, the longitudinal direction of the bead 15 is along a direction where the recesses and the protrusions of the shape variation of the actual blank are consecutive. Here, it is preferable that the bead 15 be provided such that its longitudinal direction is along the direction where the recesses and the protrusions in the shape variation of the actual blank are consecutive, in the measures-required portion of the actual blank. However, in a case where the bead cannot be provided for the measures-required portion for component design reasons or the like, the bead may be provided such that the longitudinal direction is along the direction where the recesses and the protrusions in the shape variation of the actual blank are consecutive, in the vicinal portion around the measures-required portion of the actual blank, for example.

When such a bead 15 is provided as such, the rigidity of an end portion of the blank at the time of press forming improves. In this case, it is possible to hold down corrugations (a shape variation) remaining in a press-formed article from the blank before press forming and to improve the dimensional accuracy of the press-formed article.

Note that the bead may have a protruding shape or a recessed shape, and the length, width, or height of the bead should be determined appropriately to correspond to an allowable degree from a shape required for a target press-formed article in consideration of an acceptable height or pitch of the corrugations (the shape variation) remaining in the press-formed article.

The shape of the bead can be a circular shape, an oval shape, an elliptical shape, a square shape, a rectangular shape, a triangular shape, a diamond shape, or the like in a top view. Furthermore, a mountain shape, a trapezoidal shape, a semicircular shape, a semielliptical shape, or the like is also applicable in a side view.

### <Bead-provided Actual Blank Press Forming Step>

The bead-provided actual blank press forming step S25 is a step of performing press forming on the actual blank provided with the bead 15 in a portion corresponding to the measures-required portion specified in the developed blank model measures-required portion specifying step S23A. The bead-provided actual blank press forming step S25 corresponds to a forming step.

That is, press forming is performed on the actual blank provided with the bead 15 by an actual die of the same type as the predetermined die model in the press forming analysis described above.

When press forming is performed after the bead 15 is provided for an actual blank having a shape variation, the shape of a press-formed article after press forming can be less influenced by the shape variation of the blank as illustrated in an analysis result in FIG. 48. Accordingly, a press-formed article with an excellent dimensional accuracy can be achieved, similarly to the press-formed article shape acquired by performing press forming analysis on the flat blank model.

In a case where the bead is not desired to remain after press forming, the bead may be crushed and straightened by the restriking step. Hereby, the portion provided with the bead and its peripheral portion receive strain and harden due to the strain. This further improves the rigidity, thereby making it possible to hold down corrugations remaining in the press-formed article from the blank before press forming and to improve the dimensional accuracy.

In the above present embodiment, it is possible to specify a portion largely influenced by a shape variation of a blank and to take appropriate measures for an actual blank before press forming. Accordingly, it is possible to stably acquire a press-formed article with an excellent dimensional accuracy.

Further, in the present embodiment, a plurality of patterns of blank models for a blank having a shape variation is generated, and measures-required portions are specified by finding deviation amounts in each of the patterns. Accordingly, the present embodiment is achieved in consideration of differences in shape variation between individual actual blanks.

Note that, in the above description, a period-shifted corrugated blank model of only one type is generated, but period-shifted corrugated blank models of several types may be generated. In this case, respective corrugations of the period-shifted corrugated blank models should have respective periods shifted from each other. That is, the corrugated blank model and all the period-shifted corrugated blank models should have the same wavelength and the same amplitude.

When the number of blank model patterns for a blank having a shape variation is increased, the shape variation of an actual blank can be dealt with more accurately.

Further, in the above description, the press-formed article shape in the case of a flat blank is compared with the press-formed article shape in the case of a blank including recesses and protrusions. In this comparison, a difference therebetween in the change amount (the spring back amount) from the forming bottom dead center in the press forming direction is taken as the deviation amount. However, the present invention is not limited to this.

For example, a difference obtained by subtracting the height, in the press forming direction, of a portion in the press-formed article shape after die release in the case of the flat blank from the height of its corresponding portion of the press-formed article shape after die release in the case of the blank including recesses and protrusions may be taken as the deviation amount.

In this case, it is necessary to set a common fixed point in the two press-formed article shapes, and the deviation amount may fluctuate depending on how to select the fixed point.

In this respect, when change amounts based on the shape at the forming bottom dead center, which is constant regardless of the shape of the blank, are compared with each other like the present embodiment, the deviation amount can be accurately and easily found, and this is preferable.

The present embodiment deals with stamping as an example, but even when the present embodiment is carried out in drawing, an excellent dimensional accuracy can be achieved similarly to stamping.

The forming accuracy improving step S23 may further include the bead providing step S13A in the first embodiment. In this case, at least either of the blank bead providing step S23B and the bead providing step S13A may be performed selectively based on a predetermined condition such as a target accuracy.

This disclosure can also take the following configurations.
(1) A press-formed article manufacturing method is a method for manufacturing a press-formed article by performing press forming with use of a press die on a blank extracted from a metal sheet having a shape variation, and the press-formed article manufacturing method includes: a reference press-formed article shape acquisition step of acquiring a press-formed article shape after die release as a reference press-formed article shape by performing press forming analysis to perform press forming with use of a flat blank model having a flat shape by a predetermined die model set based on a shape of a target press-formed article; a corrugated blank press-formed article shape acquisition step of acquiring a press-formed article shape after die release as a corrugated blank press-formed article shape by generating a corrugated blank model with corrugations having a wavelength and an amplitude set based on the shape variation and performing press forming analysis to perform press forming with use of the generated corrugated blank model by the predetermined die model; a first deviation amount acquisition step of finding a deviation portion where the reference press-formed article shape and the corrugated blank press-formed article shape deviate from each other, and a first deviation amount as a deviation amount in the deviation portion, by comparing the reference press-formed article shape with the corrugated blank press-formed article shape; a period-shifted corrugated blank press-formed article shape acquisition step of acquiring a press-formed article shape after die release as a period-shifted corrugated blank press-formed article shape by generating a period-shifted corrugated blank model of at least one type with corrugations having the same amplitude as the corrugations of the corrugated blank model and shifted in period from the corrugations of the corrugated blank model, and performing press forming analysis to perform press forming with use of the generated period-shifted corrugated blank model by the predetermined die model; a second deviation amount acquisition step of finding a deviation portion where the reference press-formed article shape and the period-shifted corrugated blank press-formed article shape of the at least one type deviate from each other, and a second deviation amount as a deviation amount in the deviation portion, by comparing the reference press-formed article shape with the period-shifted corrugated blank press-formed article shape of the at least one type; a measures-required portion specifying step of specifying, as measures-required portions, respective portions of the press-formed article which portions correspond to a portion having a deviation amount exceeding a predetermined threshold as the first deviation amount and a portion having a deviation amount exceeding the predetermined threshold as the second deviation amount; and a forming accuracy improving step of correcting a shape of at least either one selected from a forming surface of an actual die as a press die to be used in manufacture of the press-formed article and an actual blank as the blank to be used in the manufacture of the press-formed article in such a manner as to reduce the deviation amounts in the measures-required portions specified in the measures-required portion specifying step.
(2) The first deviation amount acquisition step acquires, as the first deviation amount, a difference between a spring back amount in a predetermined portion of the reference press-formed article shape and a spring back amount of a portion of the corrugated blank press-formed article shape which portion corresponds to the predetermined portion of the reference press-formed article shape. The second deviation amount acquisition step acquires, as the second deviation amount, a difference between a spring back amount in a predetermined portion of the reference press-formed article shape and a spring back amount of a portion of the period-shifted corrugated blank press-formed article shape which portion corresponds to the predetermined portion of the reference press-formed article shape.
(3) The forming accuracy improving step includes a bead providing step of providing beads for portions of the forming surface of the actual die which portions are to form the measures-required portions, or the measures-required portions and peripheral portions around the measures-required portions.
(4) In the bead providing step, each of the beads is provided for the actual die such that a longitudinal direction of a bead mark formed on the press-formed article by the each of the beads provided for the actual die is along a direction intersecting with an end side of the press-formed article which end side is closest to a corresponding measures-required portion.
(5) The actual blank has a shape variation in which recesses and protrusions are consecutive along a predetermined direction. In the bead providing step, each of the beads is provided for the actual die such that, in a corresponding measures-required portion of the press-formed article, a longitudinal direction of a bead mark formed on the press-formed article by the each of the beads provided for the actual die is along a direction where the recesses and the protrusions in the shape variation of the blank are consecutive.
(6) The press-formed article manufacturing method further includes: an actual press forming step of performing press forming on the blank with use of the actual die provided with the beads, in such a manner as to form bead marks in the measures-required portions in the press-formed article or in the measures-required portions and respective peripheral portions around the measures-required portions; and a restriking step of performing repressing on the press-formed article acquired by the press forming in the actual press forming step and crushing the bead marks.
(7) The forming accuracy improving step includes: a developed blank model measures-required portion specifying step of specifying measures-required portions in a developed blank model acquired by setting the measures-required portions on any of the reference press-formed article shape, the corrugated blank press-formed article shape, and the period-shifted corrugated blank press-formed article shape, and developing, to a blank model, the any of the reference press-formed article shape, the corrugated blank press-formed article shape, and the period-shifted corrugated blank press-formed article shape; and a blank bead providing step of providing beads for portions of the actual blank which portions correspond to the measures-required portions specified in the developed blank model measures-required portion specifying step.
(8) In the blank bead providing step, each of the beads is provided for the actual blank such that a longitudinal direction of the each of the beads is along a direction intersecting with an end side of the actual blank which end side is closest to a corresponding measures-required portion.
(9) The actual blank has a shape variation in which recesses and protrusions are consecutive along a predetermined direction; and in the blank bead providing step, each of the beads is provided for the actual blank such that, in a corresponding measures-required portion of the actual blank, a longitudinal direction of the each of the beads provided for the blank is along a direction where the recesses and the protrusions in the shape variation of the actual blank are consecutive.
(10) The press-formed article manufacturing method further includes: a forming step of performing press forming on the actual blank provided with the beads by the actual die; and a step of performing press forming to crush the beads after the forming step.

Here, Japanese Patent Application No. 2022-117070 (filed on July 22, 2022) and Japanese Patent Application No. 2022-198304 (filed on December 13, 2022) to which the present application claims priority are incorporated herein by reference in their entirety. Herein, the present invention has been described referring to a limited number of embodiments, but the scope of the present invention is not limited to them, and it is obvious for a person skilled in the art that the embodiments are modifiable based on the disclosure.

### Reference Signs List

1: press-formed article (target shape)
3: flat blank model
5: reference press-formed article shape
7: corrugated blank model
9: corrugated blank press-formed article shape
11: period-shifted corrugated blank model
13: period-shifted corrugated blank press-formed article shape
15: bead
21: reference press-formed article shape
22: bead mark
23: corrugated blank press-formed article shape
25: period-shifted corrugated blank press-formed article shape
31: reference press-formed article shape
33: corrugated blank press-formed article shape
41: period-shifted corrugated blank model
43: period-shifted corrugated blank press-formed article shape
51: reference press-formed article shape
53: corrugated blank press-formed article shape
55: period-shifted corrugated blank press-formed article shape

## Claims

1. A press-formed article manufacturing method for manufacturing a press-formed article by performing press forming with use of a press die on a blank extracted from a metal sheet having a shape variation, the press-formed article manufacturing method comprising:
a reference press-formed article shape acquisition step of acquiring a press-formed article shape after die release as a reference press-formed article shape by performing press forming analysis to perform press forming with use of a flat blank model having a flat shape by a predetermined die model set based on a shape of a target press-formed article;
a corrugated blank press-formed article shape acquisition step of acquiring a press-formed article shape after die release as a corrugated blank press-formed article shape by generating a corrugated blank model with corrugations having a wavelength and an amplitude set based on the shape variation and performing press forming analysis to perform press forming with use of the generated corrugated blank model by the predetermined die model;
a first deviation amount acquisition step of finding a deviation portion where the reference press-formed article shape and the corrugated blank press-formed article shape deviate from each other, and a first deviation amount as a deviation amount in the deviation portion, by comparing the reference press-formed article shape with the corrugated blank press-formed article shape;
a period-shifted corrugated blank press-formed article shape acquisition step of acquiring a press-formed article shape after die release as a period-shifted corrugated blank press-formed article shape by generating a period-shifted corrugated blank model of at least one type with corrugations having the same amplitude as the corrugations of the corrugated blank model and shifted in period from the corrugations of the corrugated blank model, and performing press forming analysis to perform press forming with use of the generated period-shifted corrugated blank model by the predetermined die model;
a second deviation amount acquisition step of finding a deviation portion where the reference press-formed article shape and the period-shifted corrugated blank press-formed article shape of the at least one type deviate from each other, and a second deviation amount as a deviation amount in the deviation portion, by comparing the reference press-formed article shape with the period-shifted corrugated blank press-formed article shape of the at least one type;
a measures-required portion specifying step of specifying, as measures-required portions, respective portions of the press-formed article which portions correspond to a portion having a deviation amount exceeding a predetermined threshold as the first deviation amount and a portion having a deviation amount exceeding the predetermined threshold as the second deviation amount; and
a forming accuracy improving step of correcting a shape of at least either one selected from a forming surface of an actual die as a press die to be used in manufacture of the press-formed article and an actual blank as the blank to be used in the manufacture of the press-formed article in such a manner as to reduce the deviation amounts in the measures-required portions specified in the measures-required portion specifying step.

2. The press-formed article manufacturing method according to claim 1, wherein:
the first deviation amount acquisition step acquires, as the first deviation amount, a difference between a spring back amount in a predetermined portion of the reference press-formed article shape and a spring back amount of a portion of the corrugated blank press-formed article shape which portion corresponds to the predetermined portion of the reference press-formed article shape; and
the second deviation amount acquisition step acquires, as the second deviation amount, a difference between a spring back amount in a predetermined portion of the reference press-formed article shape and a spring back amount of a portion of the period-shifted corrugated blank press-formed article shape which portion corresponds to the predetermined portion of the reference press-formed article shape.

3. The press-formed article manufacturing method according to claim 1 or 2, wherein
the forming accuracy improving step includes a bead providing step of providing beads for portions of the forming surface of the actual die which portions are to form the measures-required portions, or the measures-required portions and peripheral portions around the measures-required portions.

4. The press-formed article manufacturing method according to claim 3, wherein
in the bead providing step, each of the beads is provided for the actual die such that a longitudinal direction of a bead mark formed on the press-formed article by the each of the beads provided for the actual die is along a direction intersecting with an end side of the press-formed article which end side is closest to a corresponding measures-required portion.

5. The press-formed article manufacturing method according to claim 3, wherein:
the actual blank has a shape variation in which recesses and protrusions are consecutive along a predetermined direction; and
in the bead providing step, each of the beads is provided for the actual die such that, in a corresponding measures-required portion of the press-formed article, a longitudinal direction of a bead mark formed on the press-formed article by the each of the beads provided for the actual die is along a direction where the recesses and the protrusions in the shape variation of the blank are consecutive.

6. The press-formed article manufacturing method according to any one of claims 3 to 5, further comprising:
an actual press forming step of performing press forming on the blank with use of the actual die provided with the beads, in such a manner as to form bead marks in the measures-required portions in the press-formed article or in the measures-required portions and respective peripheral portions around the measures-required portions; and
a restriking step of performing repressing on the press-formed article acquired by the press forming in the actual press forming step and crushing the bead marks.

7. The press-formed article manufacturing method according to any one of claims 1 to 6, wherein
the forming accuracy improving step includes
a developed blank model measures-required portion specifying step of specifying measures-required portions in a developed blank model acquired by setting the measures-required portions on any of the reference press-formed article shape, the corrugated blank press-formed article shape, and the period-shifted corrugated blank press-formed article shape, and developing, to a blank model, the any of the reference press-formed article shape, the corrugated blank press-formed article shape, and the period-shifted corrugated blank press-formed article shape; and
a blank bead providing step of providing beads for portions of the actual blank which portions correspond to the measures-required portions specified in the developed blank model measures-required portion specifying step.

8. The press-formed article manufacturing method according to claim 7, wherein
in the blank bead providing step, each of the beads is provided for the actual blank such that a longitudinal direction of the each of the beads is along a direction intersecting with an end side of the actual blank which end side is closest to a corresponding measures-required portion.

9. The press-formed article manufacturing method according to claim 8, wherein:
the actual blank has a shape variation in which recesses and protrusions are consecutive along a predetermined direction; and
in the blank bead providing step, each of the beads is provided for the actual blank such that, in a corresponding measures-required portion of the actual blank, a longitudinal direction of the each of the beads provided for the blank is along a direction where the recesses and the protrusions in the shape variation of the actual blank are consecutive.

10. The press-formed article manufacturing method according to any one of claims 7 to 9, further comprising:
a forming step of performing press forming on the actual blank provided with the beads by the actual die; and
a step of performing press forming to crush the beads after the forming step.
